# EUROPÄISCHE PATENTANMELDUNG

(11) **EP 3 929 115 A2**
(43) Veröffentlichungstag der Anmeldung: **29.12.2021**
(21) Anmeldenummer: 21167089.8
(22) Anmeldetag: 07.04.2021
(51) Int. Cl.: B65G 47/08, B65G 47/51, B65G 47/53, B65G 47/71, B65G 47/82, B65G 54/02

(54) **VERFAHREN UND VORRICHTUNG ZUM PUFFERN VON BEHÄLTERN**

(30) Priorität: 22.06.2020 DE 102020207677
(71) Anmelder: KRONES AG, 93073 Neutraubling (DE)
(72) Erfinder: Beyer, Michael, 93073 Neutraubling (DE); Elsperger, Stefan, 93073 Neutraubling (DE); Senn, Konrad, 93073 Neutraubling (DE); Schuesslburner, Helmut, 93073 Neutraubling (DE)
(74) Vertreter: Grünecker Patent- und Rechtsanwälte PartG mbB

(57) **Zusammenfassung**

Beschrieben werden ein Verfahren und eine Vorrichtung zum Puffern von Behältern in einer Behälterbehandlungsanlage, insbesondere Abfüllanlage. Die Behälter werden einreihig mittels wenigstens eines Einlaufförderbands in einer Einlaufrichtung eingespeichert, auf einer sich quer anschließenden Pufferfläche von schienengeführten und einzeln angetriebenen Shuttles mit Reihenschiebern in einer zur Einlaufrichtung quer verlaufenden Pufferrichtung einreihig verschoben und mittels wenigstens eines sich in Pufferrichtung an die Pufferfläche anschließenden Auslaufförderbands in einer quer zur Pufferrichtung verlaufenden Auslaufrichtung oder mittels wenigstens eines an die Pufferfläche in Pufferrichtung anschließend heranfahrbaren und insbesondere zweidimensional angetriebenen Planarmotorläufers ausgespeichert. Dadurch, dass die Behälter beim Einspeichern und/oder Ausspeichern quer zur Pufferrichtung gesteuert bewegt und dadurch bezüglich des Einlaufförderbands/ Auslaufförderbands abgebremst oder beschleunigt werden, lässt sich die Einlaufbewegung/ Auslaufbewegung der Behälter quer zur Pufferrichtung mit der Positionierung der Reihenschieber in Pufferrichtung flexibel und mit hoher Durchsatzrate für die Verarbeitung lückenlos einlaufender/ auslaufender Behälterströme optimieren.

## Beschreibung

Die Erfindung betrifft ein Verfahren und eine Vorrichtung zum Puffern von Behältern in einer Behälterbehandlungsanlage gemäß dem Oberbegriff des Anspruchs 1 bzw. 14.

Ein gattungsgemäßes Verfahren und eine gattungsgemäße Vorrichtung sind aus der DE 10 2018 211 859 A1 bekannt. Demnach können einreihige Behältergruppen, beispielsweise bestehend aus Getränkeflaschen, mittels quer ausgerichteter Reihenschieber ohne Staudruck über eine Pufferfläche geschoben werden. Im Zusammenhang mit einem jeweils quer zur Pufferrichtung ausgerichteten Behältereinlauf und Behälterauslauf ergibt sich so eine Puffervorrichtung, die Behälterströme bei effizienter Platzausnutzung, beispielsweise nach dem Frist-in-first-out-Prinzip puffern kann.

Als nachteilig hat sich jedoch insbesondere der Ablauf beim Einspeichern und Ausspeichern der Behältergruppen am Übergang vom Behältereinlauf/ Behälterauslauf zur Pufferfläche, also beim Übernehmen der Behältergruppen durch die Reihenschieber bzw. bei der Abgabe der Behälter aus den Reihenschiebern erwiesen. Zwar wurde zur Optimierung des Einspeicherns vorgeschlagen, die Behältergruppen im Einlaufbereich quer entlang einer sägezahnförmigen Linie vor die sich annähernden Reihenschieber zu fahren, um die Übernahme durch die Reihenschieber zu erleichtern. Dies bedingt jedoch vergleichsweise langsame Relativbewegungen der im Einlaufbereich und Auslaufbereich vorgeschobenen Reihenschieber und der quer dazu einlaufenden oder auslaufenden Behältergruppen. Insbesondere sind Abläufe beim Einspeichern und Ausspeichern wünschenswert, bei denen die Behälter in den Reihenschiebern sowohl von vorauslaufenden als auch von nachlaufenden Führungen, also in quer zur Pufferrichtung verlaufenden Führungskanälen, geführt werden. Beim gattungsgemäßen Verfahren werden die Behälter dagegen nur nachlaufend von den Reihenschiebern geführt, wodurch Änderungen der Vorschubgeschwindigkeit stark eingeschränkt werden, um ein Umfallen der Behälter zu vermeiden.

Es besteht daher Bedarf für demgegenüber verbesserte Verfahren und Vorrichtungen zum Puffern einreihig gruppierter Behälter unter Beibehaltung einer räumlichen Trennung derartiger Behälterreihen beim Puffern.

Die gestellte Aufgabe wird mit dem Verfahren gemäß Anspruch 1 und der Vorrichtung gemäß Anspruch 14 gelöst.

Das Verfahren dient zum Puffern von Behältern, insbesondere Flaschen, in einer Behälterbehandlungsanlage, insbesondere Abfüllanlage. Die Behälter werden einreihig mittels wenigstens eines Einlaufförderbands in einer Einlaufrichtung eingespeichert, auf einer sich quer anschließenden Pufferfläche von Schienen geführten und einzeln angetriebenen Shuttles mit Reihenschiebern in einer zur Einlaufrichtung quer verlaufenden Pufferrichtung einreihig verschoben und mittels wenigstens eines sich in Pufferrichtung an die Pufferfläche anschließenden Auslaufförderbands in einer quer zur Pufferrichtung verlaufenden Auslaufrichtung ausgespeichert. Alternativ können die Behälter mittels wenigstens eines an die Pufferfläche in Pufferrichtung anschließend heranfahrbaren und insbesondere zweidimensionalen angetriebenen Planarmotorläufers ausgespeichert werden.

Erfindungsgemäß werden die Behälter beim Einspeichern und/oder beim Ausspeichern quer zur Pufferrichtung gesteuert bewegt und dadurch bezüglich des Einlaufförderbands/ Auslaufförderbands abgebremst oder beschleunigt. Darunter ist zu verstehen, dass die Behälter im Einlaufbereich/ Auslaufbereich nicht nur durch das Einlaufförderband/ Auslaufförderband bewegt werden, sondern durch wenigstens eine quer zur Pufferrichtung wirkende Bewegungskomponente aktiv manipuliert werden. Insbesondere werden die Behälter dadurch quer zur Pufferrichtung abgebremst oder beschleunigt, während sie in den Reihenschiebern in Pufferrichtung und entgegen der Pufferrichtung seitlich geführt werden.

Dadurch lassen sich auch intermittierende Vorschubbewegungen der Reihenschieber und kontinuierliche Einlaufbewegungen und/oder Auslaufbewegungen der Behälter bezüglich der Reihenschieber flexibel miteinander koordinieren. Hierfür werden die Vorschubbewegung der Reihenschieber und die Manipulation der Behälter quer dazu mittels elektronischer Steuerung der Shuttles und des Einlauf- und/oder Auslaufförderbands örtlich und zeitlich koordiniert.

Dies dient insbesondere dem Einspeichern und/oder Ausspeichern in Einlaufrichtung und/oder Auslaufrichtung lückenlos aufeinanderfolgender einreihiger Behältergruppen, die nachfolgend der Einfachheit halber als Behälterreihen bezeichnet werden. Darunter ist zu verstehen, dass ein lückenlos einlaufender Behälterstrom in Behälterreihen aufgeteilt wird, die sowohl zeitlich als auch in Einlaufrichtung gesehen lückenlos aufeinanderfolgen, und dann insbesondere jede Behälterreihe in einen separaten Reihenschieber einläuft. Beim Ausspeichern werden die Behälterreihen in umgekehrter Reihenfolge vorzugsweise zu einem zeitlich und in Auslaufrichtung lückenlosen Behälterstrom zusammengefasst.

Vorzugsweise werden die Behälter auf dem Einlaufförderband zu in Einlaufrichtung insbesondere lückenlos aufeinanderfolgenden Behälterreihen gruppiert und während ihres jeweiligen Einlaufs in einen zugeordneten Reihenschieber auf einem sich verlangsamenden Abbremsband von einer Einlaufgeschwindigkeit des Einlaufförderbands insbesondere bis zum Stillstand abgebremst. Dabei schiebt der Reihenschieber die jeweilige Behälterreihe in Pufferrichtung vom Einlaufförderband über das Abbremsband. Anschließend kann das Abbremsband wieder beschleunigt werden, um eine auf dem Einlaufförderband in Einlaufrichtung insbesondere lückenlos nachfolgende Behälterreihe auf das Abbremsband zu leiten.

Durch das sich verlangsamende Abbremsband kann ein ruckartiges Anschlagen der Behälter am Ende des Reihenschiebers und/oder auf vorauslaufenden Behältern und damit ein Umfallen und/oder eine Beschädigung der Behälter vermieden werden. Durch Verlangsamung des Abbremsbands lässt sich zudem der zeitliche Ablauf des Behältereinlaufs in den Reihenschieber und der Vorschub des Reihenschiebers in Pufferrichtung zeitlich so koordinieren, dass nacheinander im Bereich der Reihenschieber eintreffende Behälterreihen passend zur jeweiligen Vorschubposition des zugeordneten Reihenschiebers angeordnet sind.

Ein Abbremsen des Abbremsbands bis zum Stillstand ist insbesondere dann vorteilhaft, wenn am Ende der Reihenschieber keine Anschläge für die jeweilige Behälterreihe vorhanden sind. In diesem Fall können die Behälterreihen jeweils durch gesteuertes Abbremsen des Abbremsbands exakt bis zum Ende der Reihenschieber einlaufen und dort angehalten werden. Ist dagegen ein Anschlag am Ende der Reihenschieber vorhanden, so kann ein vergleichsweise langsames Weiterlaufen des Abbremsbands dazu benutzt werden, die Behälter lückenlos aneinander und gegen den Anschlag einlaufen zu lassen.

Das Abbremsband läuft zu Beginn des Einleitens einer bestimmten Behälterreihe vorzugsweise mit der Einlaufgeschwindigkeit des Einlaufförderbands, um einen möglichst sanften Übergang der Behälter vom Einlaufförderband auf das Abbremsband zu ermöglichen. Dies ist jedoch nicht zwingend erforderlich, denkbar wäre auch eine demgegenüber reduzierte Geschwindigkeit des Abbremsbands. Beispielsweise beträgt die Maximalgeschwindigkeit des Abbremsbands beim Einspeichern wenigstens 90% der Einlaufgeschwindigkeit des Einlaufförderbands und die Minimalgeschwindigkeit des Abbremsbands beim Einspeichern höchstens 10% der Einlaufgeschwindigkeit des Einlaufförderbands.

Vorzugsweise werden die auf dem Einlaufförderband einlaufenden Behälter entgegen der Pufferrichtung in Einlaufpositionen abgelenkt, die mit der Vorschubposition des zugeordneten Reihenschiebers zum Zeitpunkt des Einlaufs des jeweiligen Behälters in den Reihenschieber in Einlaufrichtung gesehen fluchten. Die Einlaufpositionen werden auf dem Einlaufförderband so hergestellt, dass die einzelnen Behälter beim jeweiligen Eintreffen am Reihenschieber an der Öffnung seines Führungskanals angeordnet sind und in diesen einlaufen können. Dies erfolgt unter Berücksichtigung der konstanten Einlaufgeschwindigkeit des Einlaufförderbands und der gegebenenfalls wechselnden Vorschubgeschwindigkeit und/oder eines getakteten Vorschubs der Reihenschieber. Dadurch lässt sich ein zuverlässiger und kollisionsfreier Einlauf der Behälter in die Reihenschieber bei kontinuierlicher Behälterzuführung herstellen.

Vorzugsweise lenkt man die Behälter mittels einer Ablenkschiene ab, die zuerst quer zur Einlaufrichtung ausgefahren wird und sich dabei mit ihrem freien Ende mit dem jeweils vordersten Behälter der jeweiligen Behälterreihe in Einlaufgeschwindigkeit mitbewegt. Die Ablenkschiene wird bei Erreichen der Einlaufposition des vordersten Behälters angehalten und dann den Einlaufpositionen der jeweils nachfolgenden Behälter der Behälterreihe entsprechend wieder zurückgezogen. Dadurch kann jeder einzelne Behälter stromaufwärts der Reihenschieber in eine geeignete Einlaufposition versetzt werden, die zum Zeitpunkt des Einlaufens des jeweiligen Behälters der Vorschubposition des zugeordneten Reihenschiebers entspricht.

Die Einlaufposition kann als ein Versatz des jeweiligen Behälters entgegen der Pufferrichtung ausgehend von der einheitlichen Bewegungsbahn des Behälterstroms stromaufwärts der Ablenkschiene verstanden werden. Dieser Versatz wird auf der Basis eines zuvor festgelegten Bewegungsablaufs der Reihenschieber passend zu deren Vorschubpositionen beim Eintreffen des jeweiligen Behälters durch das Ausfahren, Mitbewegen, Anhalten und Zurückziehen der Ablenkschiene gesteuert.

Vorzugsweise wird zwischen aufeinanderfolgenden Behälterreihen im Bereich des Abbremsbands ein Mindestabstand von wenigstens 80% der Standflächenbreite der Behälter, jeweils in Pufferrichtung gesehen, eingehalten. Dadurch hat eine gerade abgebremste Behälterreihe bereits ausreichend Reibschluss mit dem Abbremsband verloren, bevor dieses zum Einleiten der nachfolgenden Behälterreihe wieder beschleunigt wird. Anders gesagt bleibt so genügend Zeit für ein Beschleunigen und Abbremsen des Abbremsbands für jede einzelne Behälterreihe. Der Mindestabstand kann beispielsweise dadurch eingehalten werden, dass die Führungskanäle der Reihenschieber beim Einspeichern auf einem geeigneten Abstand in Pufferrichtung zueinander gehalten werden. Beispielsweise sind dann zwei Reihenschieber in geeigneten Abstand zueinander am jeweiligen Shuttle starr angeordnet.

Vorzugsweise laufen die Behälter in den Reihenschiebern über einen bezüglich der Einlaufrichtung schräg verlaufenden Bandübergang vom Einlaufförderband auf das Abbremsband. Dadurch kann eine noch ungebremst nachfolgende Behälterreihe nicht auf eine bereits abgebremste Behälterreihe auflaufen. Außerdem können ruckartige Geschwindigkeitsänderungen der Behälter am Übergang vom Einlaufförderband zum Abbremsband vermieden werden, falls diese mit unterschiedlichen Geschwindigkeiten laufen sollten.

Die Reihenschieber führen die Behälter dabei quer zur Pufferrichtung weiter trotz eines diesbezüglich schrägen Verlaufs des Einlaufförderbands und des Abbremsbands im Bereich des Bandübergangs. Das Abbremsband und das Einlaufförderband verlaufen am Bandübergang mit einem Winkel von höchsten 45° schräg zur Einlaufrichtung.

Bei einer weiteren vorteilhaften Ausführungsform wird eine vorauslaufende Behälterreihe beim Ausspeichern im zugeordneten Reihenschieber in Pufferrichtung über ein insbesondere mit der Auslaufgeschwindigkeit des Auslaufförderbands laufendes Beschleunigungsband auf das Auslaufförderband geschoben, wohingegen eine unmittelbar nachfolgende Behälterreihe im zugeordneten Reihenschieber auf das demgegenüber abgebremste und insbesondere stillstehende Beschleunigungsband geschoben, sukzessive auf die Auslaufgeschwindigkeit beschleunigt und auf das Auslaufförderband geleitet wird. Dies erfolgt vorzugsweise derart, dass die nachfolgende Behälterreihe auf dem Auslaufförderband in Auslaufrichtung lückenlos an die vorauslaufende Behälterreihe anschließt.

Somit können die räumlich voneinander getrennt gepufferten Behälterreihen insbesondere bei kontinuierlich laufendem Auslaufförderband wieder zu einem zeitlich und in Auslaufrichtung lückenlosen Behälterstrom vereinigt werden.

Vorzugsweise läuft die nachfolgende Behälterreihe im zugeordneten Reihenschieber über einen schräg zur Auslaufrichtung verlaufenden Bandübergang vom Beschleunigungsband auf das Auslaufförderband. Dadurch lässt sich ein ruckartiger Bandübergang zum Auslaufförderband verhindern.

Hierbei bewirken die Reihenschieber eine Führung der Behälterreihe in Auslaufrichtung trotz des schräg verlaufenden Bandübergangs zwischen dem Beschleunigungsband und dem Auslaufförderband. Das heißt, das Beschleunigungsband und das Auslaufförderband verlaufen am Bandübergang jeweils schräg zur Auslaufrichtung, insbesondere mit einem Winkel von höchsten 45° zur Auslaufrichtung, so dass die Behälter dabei jeweils vom Führungskanal des Reihenschiebers weiter in Auslaufrichtung geführt werden.

Bei einer weiteren vorteilhaften Ausführungsform werden die Behälter von wenigstens einem in die Pufferfläche integrierten und quer zur Pufferrichtung verlaufenden Gruppierungsband innerhalb der Reihenschieber aneinandergeschoben und/oder aus vorauslaufenden Reihenschiebern neben die Pufferfläche und von dort wieder zurück in jeweils nachfolgende Reihenschieber gefahren. Dadurch lassen sich beispielsweise gegebenenfalls vorhandene Lücken zwischen Behältern in den Reihenschiebern schließen und/oder überzählige Behälter aus Reihenschiebern entfernen bzw. fehlende Behälter in Reihenschiebern eingliedern.

Bei einer weiteren vorteilhaften Ausführungsform werden unterhalb des Einlaufförderbands und/oder des Auslaufförderbands und/oder der Pufferfläche geführte Mitnehmer durch quer zur Pufferrichtung an den Reihenschiebern verlaufende Durchgriffsschlitze in die Reihenschieber und zwischen darin quer zur Pufferrichtung benachbarte Behälter motorisch eingeschwenkt. Ferner bewegt man die Mitnehmer dann motorisch entlang der Durchgriffsschlitze, um eine Auslaufeinteilung der Behälter herzustellen und/oder die Behälter zu gruppieren und/oder die Behälter zur Übergabe an das Auslaufförderband zu beschleunigen.

Die Mitnehmer werden beispielsweise von einem unterhalb der Pufferfläche angeordneten Fördermittel, beispielsweise einer Lineareinheit, einzeln angetrieben und ragen von dort durch einen in der Transportebene quer zur Pufferrichtung verlaufenden Durchgriffschlitz empor, um einzelne oder mehrere Behälter durch das Fördermittel im Reihenschieber zu verschieben. Dadurch können die Behälter im Bereich des Einlaufförderbands und/oder des Auslaufförderbands und/oder in dazwischenliegenden Bereichen der Pufferfläche zusätzlich quer zur Pufferrichtung gruppiert und/oder auf eine geeignete Auslaufgeschwindigkeit beschleunigt werden.

Bei einer weiteren vorteilhaften Ausführungsform werden zum Ausspeichern Schlitten mit Fixierelementen zum gesteuerten Festhalten und Freigeben einer Gruppe aus den Reihenschiebern auslaufender Behälter zwischen dem Auslaufförderband und einer in Auslaufrichtung an das Auslaufförderband anschließenden Förderstrecke in und entgegen der Auslaufrichtung oszillierend bewegt. Damit können die Gruppen beispielsweise herzustellenden Gebinden entsprechend vorgruppiert, auf geeigneten Abstand zueinander gebracht und/oder mit einer auf der Förderstrecke vorhandenen Förderkette oder dergleichen Förderelementen synchronisiert werden. Diese Gruppierung der Behälter, beispielsweise vor dem Verpacken der Behälter, lässt sich somit zeitlich zumindest teilweise von der Steuerung der Reihenschieber und des Auslaufförderbands entkoppeln.

Hierbei können die Behälter von den Schlitten in einer den herzustellenden Gebinden entsprechenden Anzahl von Längsreihen (Gassen) gemeinsam festgehalten und an geeigneter Stelle zur Übergabe an die Förderstrecke wieder freigegeben werden.

Bei einer weiteren vorteilhaften Ausführungsform erfolgt das Ausspeichern mittels Planarmotorläufern, die in einer Anfahrrichtung quer zur Pufferrichtung in den Bereich der Reihenschieber an die Pufferfläche heranfahren, wobei die Reihenschieber die Behälter von der Pufferfläche auf Ladenflächen der dort wartenden Planarmotorläufer verschieben und die Planarmotorläufer die Behälter insbesondere unter Beibehaltung der Anfahrrichtung von der Pufferfläche wegbewegen. Die ausgespeicherten Behälter können auf den Planarmotorläufern flexibel und lenkbar abtransportiert werden. Es ist hierbei auch denkbar, die Behälter auf den Planarmotorläufern in Pufferrichtung von der Pufferfläche wegzubewegen. In diesem Fall werden die Reihenschieber nach Überschieben der Behälter auf die Ladeflächen der Planarmotorläufer von diesen abgehoben, so dass die Behälter in Pufferrichtung gesehen nicht mehr mit den Reihenschiebern kollidieren können.

Beim beschriebenen Verfahren nehmen die Reihenschieber die Behälter vorzugsweise einreihig und in Pufferrichtung voneinander getrennt in quer zur Pufferrichtung verlaufenden und sowohl in als auch entgegen der Pufferrichtung begrenzten Führungskanälen auf. Dadurch ist eine zweiseitige Führung der Behälter sowohl bei Stillstand, Vorschub, Abbremsen und Beschleunigen der Reihenschieber gegeben als auch bei Überlagerung von Bewegungskomponenten quer zur Pufferrichtung und im Bereich diesbezüglich schräg verlaufender Einlaufförderbänder, Auslaufförderbänder, Abbremsbänder und/oder Beschleunigungsbänder.

Die Vorrichtung dient zum Puffern einreihig gruppierter Behälter in einer Behälterbehandlungsanlage, insbesondere Abfüllanlage, und umfasst eine Pufferfläche und ein darüber angeordnetes Transportsystem zum Verschieben der Behälter auf der Pufferfläche in einer Pufferrichtung von einem Einlaufbereich mit wenigstens einem quer zur Pufferrichtung verlaufenden Einlaufförderband in einen Auslaufbereich mit wenigstens einem in Pufferrichtung an die Pufferfläche anschließenden und quer dazu angetriebenen Auslaufförderband. Alternativ dazu kann der Auslaufbereich ein Planarmotorsystem mit in Pufferrichtung anschließend an die Pufferfläche heranfahrbaren Planarmotorläufern umfassen.

Das Transportsystem umfasst an Schienen geführte und unabhängig voneinander angetriebene Shuttles mit insbesondere paarweise quer zur Pufferrichtung ausgerichteten Reihenschiebern zum einreihig gruppierten Verschieben der Behälter.

Erfindungsgemäß umfasst die Vorrichtung wenigstens einen in/am Einlaufbereich und/oder Auslaufbereich angeordneten und intermittierend angetriebenen Behältermanipulator zum Beschleunigen und/oder Abbremsen der Behälter quer zur Pufferrichtung und relativ zum Einlaufförderband und/oder Auslaufförderband. Dadurch lassen sich die bezüglich des Anspruch 1 beschriebene Vorteile erzielen.

Der Behältermanipulator erzeugt unabhängig vom Einlaufförderband und/oder Auslaufförderband wenigstens eine quer zur Pufferrichtung verlaufende Bewegungskomponente, mit der die Behälter beim Einspeichern und/oder Ausspeichern abgebremst oder beschleunigt werden. Bei dem Behältermanipulator kann es sich beispielsweise um ein Förderband handeln, um einzeln quer zur Pufferrichtung angetriebene Mitnehmer für die Behälter und/oder um quer zur Pufferrichtung oszillierend bewegbare Schlitten oder dergleichen.

Vorzugsweise umfasst das Einlaufförderband mehrere nebeneinander angeordnete Behälterbahnen, und der Behältermanipulator ist ein einbahniges Abbremsband, welches unter den Reihenschiebern an einem schräg zur Einlaufrichtung verlaufenden Bandübergang an eine in Pufferrichtung gesehen vordere Behälterbahn des Einlaufförderbands quer zur Pufferrichtung anschließt. Damit lassen sich die bezüglich des Anspruchs 2 beschriebenen Vorteile erzielen.

Das Einlaufförderband kann hierbei kontinuierlich mit einer vorgegebenen Einlaufgeschwindigkeit angetrieben werden. Das Abbremsband kann hierbei in Abhängigkeit von Vorschubpositionen einzelner Reihenschieber von der Einlaufgeschwindigkeit abgebremst und wieder auf diese beschleunigt werden, insbesondere bis zum und/oder ausgehend vom Stillstand des Abbremsbands. Denkbar ist aber auch, dass das Abbremsband nicht exakt auf die Einlaufgeschwindigkeit beschleunigt wird, sondern lediglich auf eine Maximalgeschwindigkeit von wenigstens 90% der Einlaufgeschwindigkeit. Ebenso ist alternativ zu einem Abbremsen auf Stillstand denkbar, das Abbremsband bis auf eine Minimalgeschwindigkeit von höchstens 10% der Einlaufgeschwindigkeit abzubremsen.

Vorzugsweise umfasst die Vorrichtung ferner eine Ablenkschiene, die schräg zur Einlaufrichtung ausgefahren und mit einem Behälter in Einlaufgeschwindigkeit synchron mitbewegt werden kann. Nach Ausfahren der Ablenkschiene bis zu einem vorgegebenen Versatz entgegen der Pufferrichtung kann diese angehalten und den Versatz synchron mit dem Vorschub eines zugeordneten Reihenschiebers reduzierend wieder eingefahren werden. Damit lassen sich die bezüglich der Ansprüche 3 und 4 beschriebenen Vorteile erzielen.

Vorzugsweise umfasst das Auslaufförderband mehrere nebeneinander angeordnete Behälterbahnen, von denen sich wenigstens eine in Pufferrichtung gesehen vordere Behälterbahn bis zum stirnseitigen Ende der Reihenschieber erstreckt, wobei der Behältermanipulator ein insbesondere einbahniges Beschleunigungsband ist, welches unter den Reihenschiebern an einem schräg zur Auslaufrichtung verlaufenden Bandübergang an eine in Pufferrichtung gesehen hintere Behälterbahn des Auslaufförderbands quer zur Pufferrichtung anschließt. Das Auslaufförderband kann dann kontinuierlich mit einer vorgegebenen Auslaufgeschwindigkeit angetrieben werden, während das Beschleunigungsband in Abhängigkeit von den Vorschubpositionen einzelner Reihenschieber insbesondere ausgehend vom Stillstand auf die Auslaufgeschwindigkeit des Auslaufförderbands beschleunigt werden kann.

Es ist so möglich, eine vorauslaufende Behälterreihe bei synchron zueinander laufenden Auslaufförderband und Beschleunigungsband auszuspeichern, eine nachfolgende Behälterreihe zuerst auf das stillstehende Beschleunigungsband zu schieben und das Beschleunigungsband dann gezielt derart zu beschleunigen, dass die nachfolgende Behälterreihe beim Übergang zum Auslaufförderband zeitlich und in Auslaufrichtung lückenlos an die vorauslaufende Behältergruppe anschließt.

Bei einer weiteren vorteilhaften Ausführungsform umfasst die Vorrichtung ferner einen in die Pufferfläche integrierten Behältermanipulator mit wenigstens einem schräg zur Pufferrichtung verlaufenden und intermittierend in Richtung auf das Ende der Reihenschieber hin angetriebenen Gruppierungsband zum einreihigen Aneinanderschieben von Behältern innerhalb einzelner Reihenschieber. Dadurch lassen sich gegebenenfalls zwischen den Behältern vorhandene Lücken innerhalb des Reihenschiebers schließen.

Bei einer weiteren vorteilhaften Ausführungsform umfasst die Vorrichtung ferner einen in die Pufferfläche integrierten Behältermanipulator mit wenigstens einem quer und insbesondere orthogonal zur Pufferrichtung verlaufenden Gruppierungsband, das zum Austausch von Behältern zwischen einzelnen Reihenschiebern intermittierend bidirektional angetrieben ist und sich über das insbesondere auslaufseitige Ende der Reihenschieber hinaus erstreckt. Dadurch können überzählige Behälter aus einem Reihenschieber vorübergehend neben die Pufferfläche gefahren werden und/oder fehlende Behälter aus dem Bereich neben der Pufferfläche in unvollständig gefüllte Reihenschieber eingeleitet werden.

Bei einer weiteren vorteilhaften Ausführungsform umfasst der Behältermanipulator ein unterhalb des Einlaufförderbands und/oder Auslaufförderbands quer zur Pufferrichtung verlaufendes Fördermittel und daran befestigte Mitnehmer, die sich motorisch durch in den Reihenschiebern ausgebildete Durchgriffsschlitze in die Reihenschieber zwischen die Behälter einschwenken lassen, um diese durch Antrieb des Fördermittels quer zur Pufferrichtung zu verschieben.

Insbesondere könne die Mitnehmer dann zwischen die Behälter eingeschwenkt werden, um eine Auslaufeinteilung der Behälter herzustellen und/oder die Behälter innerhalb der jeweiligen Behälterreihe zu gruppieren und/oder die Behälter zur Übergabe an das Auslaufförderband zu beschleunigen.

Vorzugsweise ist das Fördermittel dann zum intermittierenden Beschleunigen/ Abbremsen der Mitnehmer zwischen Stillstand und Einlaufgeschwindigkeit/ Auslaufgeschwindigkeit ausgebildet. Insbesondere lassen sich die Behälter dann innerhalb der Reihenschieber vom Stillstand bis auf Auslaufgeschwindigkeit zur ruckfreien Übergabe der Behälter an das Auslaufförderband beschleunigen.

Bei einer weiteren vorteilhaften Ausführungsform umfasst die Vorrichtung ferner einen in die Pufferfläche integrierten Behältermanipulator mit einem unterhalb der Pufferfläche quer zur Pufferrichtung verlaufenden Fördermittel und daran befestigte Mitnehmer, die sich motorisch von unterhalb der Pufferfläche nach oben hin in die Reihenschieber zwischen einreihig benachbarte Behälter einschwenken lassen.

Der Behältermanipulator umfasst dann einen an das Einlaufförderband und/oder Auslaufförderband angrenzenden und/oder einen dazwischen in die Pufferfläche integrierten Überschubbereich für die Behälter mit wenigsten einem parallel zum Fördermittel verlaufenden Durchgriffsschlitz für die Mitnehmer.

Der jeweilige Mitnehmer ragt dann durch den Durchgriffsschlitz vom Fördermittel bis zu den Durchgriffsschlitzen der Reihenschieber empor. Diese halten dann im Überschubbereich an, um die Behälter in den Reihenschiebern durch die vom Fördermittel bewegten Mitnehmer zu verschieben. Danach werden die Mitnehmer vom Fördermittel aus dem Bereich der Pufferfläche herausbewegt und die Reihenschieber in Pufferrichtung weiterbewegt.

Bei einer weiteren vorteilhaften Ausführungsform umfasst der Behältermanipulator einen in/ entgegen der Auslaufrichtung über dem Auslaufförderband oszillierend bewegbaren Schlitten mit Fixierelementen zum gesteuerten Festhalten einer Gruppe von aus einem Reihenschieber auslaufenden Behältern und zur gesteuerten Freigabe der Behälter im Bereich einen in Auslaufrichtung an das Auslaufförderband anschließenden Förderstrecke insbesondere mit einer Schubkette. Damit lassen sich die bezüglich des Anspruchs 11 beschriebenen Vorteile erzielen.

Bevorzugte Ausführungsformen der Erfindung sind zeichnerisch dargestellt. Es zeigen:
- Figur 1: eine schematische Draufsicht auf die Vorrichtung;
- Figur 2: eine schematische seitliche Ansicht der Vorrichtung;
- Figur 3A - 3F: ein Abbremsen von Behältern beim Einspeichern;
- Figur 4A - 4F: ein Herstellen von Einlaufpositionen auf dem Einlaufförderband;
- Figur 5A - 5F: ein Abbremsen von Behältern beim Ausspeichern;
- Figur 6A - 6F: ein Verteilen von Behältern innerhalb und zwischen Reihenschiebern;
- Figur 7: einen schematischen Querschnitt eines Behältermanipulators mit einschwenkbaren Mitnehmern;
- Figur 8: eine seitliche Ansicht des Manipulators gemäß Figur 7;
- Figur 9: eine schematische Draufsicht auf die prinzipielle Anordnung des Behältermanipulators gemäß Figur 7 und 8;
- Figur 10: eine Draufsicht auf einen Behältermanipulator mit oszillierenden Auslaufschlitten;
- Figur 11: eine seitliche Ansicht des Behältermanipulators gemäß Figur 10;
- Figur 12: eine seitliche Ansicht des Behältermanipulators im Bereich des Auslaufförderbands; und
- Figur 13: eine schematische Draufsicht auf einen alternativen Auslaufbereich mit einem Planarmotorsystem.

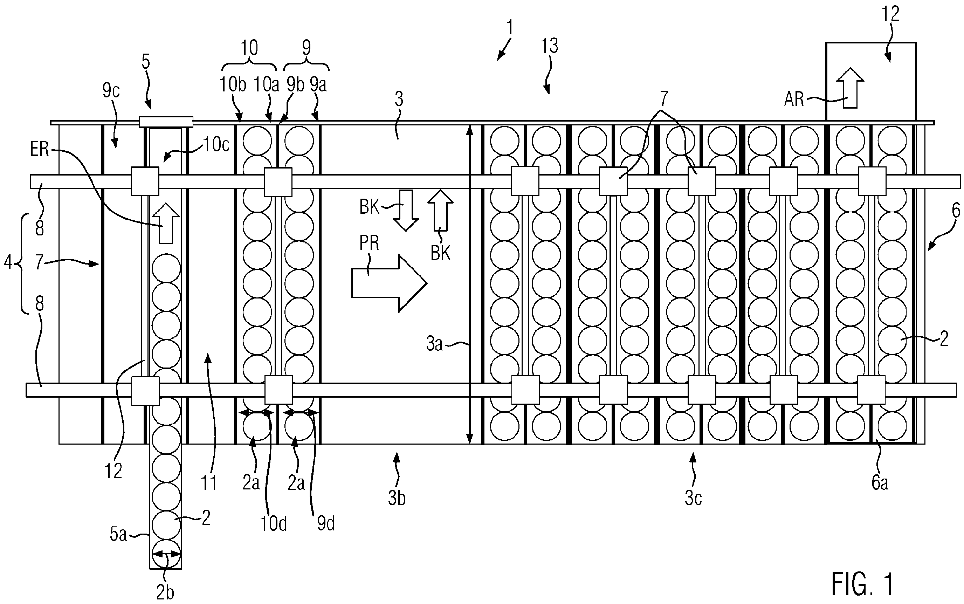

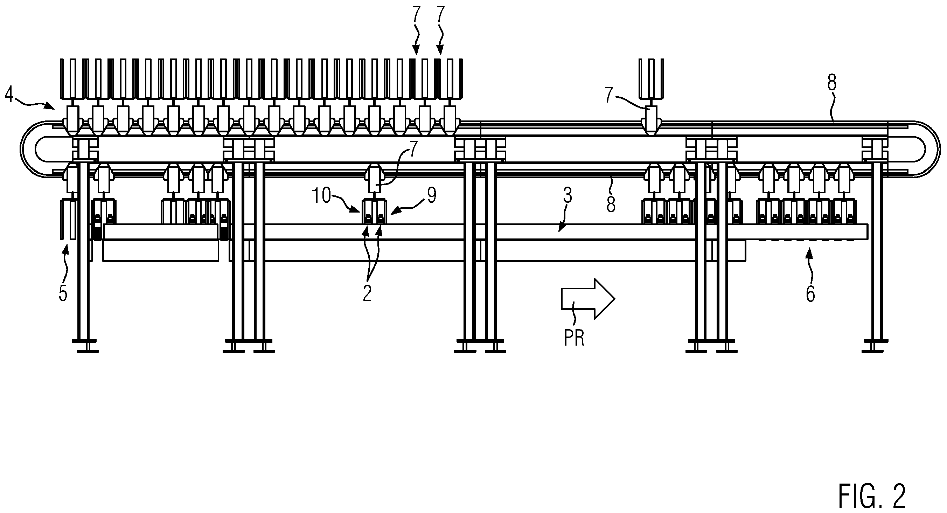

Wie die Figuren 1 und 2 erkennen lassen, umfasst die Vorrichtung 1 zum Puffern einreihig gruppierter Behälter 2 / Behälterreihen 2a eine im Wesentlichen horizontale und feststehende Pufferfläche 3 sowie ein darüber angeordnetes Transportsystem 4 zum Verschieben der Behälter 2 / Behälterreihen 2a auf der Pufferfläche 3 in einer Pufferrichtung PR von einem Einlaufbereich 5 mit wenigstens einem Einlaufförderband 5a in einen Auslaufbereich 6 mit wenigstens einem Auslaufförderband 6a.

Das wenigstens eine Einlaufförderband 5a verläuft in einer Einlaufrichtung ER und das Auslaufförderband 6a in einer Auslaufrichtung AR jeweils quer und insbesondere orthogonal zur Pufferrichtung PR des Transportsystems 4.

Das Transportsystem umfasst unabhängig voneinander angetriebene Shuttles 7 und als geschlossene Umlaufbahn ausgebildete Schienen 8, an denen die Shuttles 7 entlanglaufen.

Die Shuttles 7 umfassen vorzugsweise wenigstens einen (in Pufferrichtung PR gesehen) vorderen Reihenschieber 9 und einen diesbezüglich hinteren Reihenschieber 10. Die Shuttles 7 könnten aber auch jeweils nur einen der Reihenschieber 9, 10 umfassen.

Die in Pufferrichtung PR hintereinander am Shuttle 7 angeordneten Reihenschieber 9, 10 können auch als Zwillings-Reihenschieber angesehen werden. Jeder Reihenschieber 9, 10 ist zur einreihigen Aufnahme der Behälter 2, also zur räumlich voneinander getrennten Aufnahme der Behälterreihen 2a, ausgebildet und quer, insbesondere orthogonal, zur Pufferrichtung PR ausgerichtet.

Die Reihenschieber 9, 10 können auch als in Pufferrichtung PR bewegliche und räumlich voneinander getrennte Pufferzeilen für die einzelnen Behälterreihen 2a angesehen werden.

Die Reihenschieber 9, 10 sind zur jeweils vorauslaufenden und nachlaufenden Führung der einreihig gruppierten Behälter 2 und somit zu deren seitlicher Führung sowohl in Pufferrichtung PR, also bei deren Vorschub in Pufferrichtung PR, beispielsweise bei Beschleunigung des Vorschubs, als auch entgegen der Pufferrichtung PR, insbesondere beim Abbremsen des Vorschubs, ausgebildet.

Bei den Behältern 2 handelt es sich beispielsweise um Flaschen. Die Behälter 2 weisen einen Durchmesser 2b auf.

Die Reihenschieber 9, 10 umfassen zu diesem Zweck jeweils eine den Behältern 2 vorauslaufende vordere Reihenführung 9a, 10a und eine den Behältern 2 nachlaufende hintere Reihenführung 9b, 10b sowie von diesen jeweils begrenzte Führungskanäle 9c, 10c zur Aufnahme und zweiseitigen Führung der Behälter 2 / einzelnen Behälterreihen 2a.

Die Reihenschieber 9, 10 bzw. deren Führungskanäle 9c, 10c weisen eine jeweils zwischen vorderer Reihenführung 9a, 10a und hinterer Reihenführung 9b, 10b definierte lichte Weite 9d, 10d auf, die vorzugsweise an den Durchmesser 2b der Behälter 2 (bei nicht kreisförmigem Querschnitt an die jeweilige Behälterbreite in Pufferrichtung PR) angepasst werden kann.

Die Reihenschieber 9, 10 erstrecken sich vorzugsweise im Wesentlichen über die gesamte Breite 3a der Pufferfläche 3 und weisen vorzugsweise eine Breite (quer zur Pufferrichtung PR) von 3 bis 6 m auf, insbesondere von 4 bis 5,5 m.

In den Figuren 1 und 2 sind ferner beispielhaft mögliche Anordnungen eines einlaufseitigen Behältermanipulators 11, eines auslaufseitigen Behältermanipulators 12 und eines dazwischen in die Pufferfläche 3 integrierten Behältermanipulators 13 schematisch angedeutet.

Den Behältermanipulatoren 11, 12, 13 gemeinsam ist, dass sie die Behälter 2 unabhängig vom Einlaufförderband 5a und/oder Auslaufförderband 6a mit einer quer zur Pufferrichtung PR wirkende Bewegungskomponenten BK (in der Figur 1 lediglich schematisch und ortsunabhängig im Bereich der Pufferfläche 3 angedeutet) beaufschlagen können.

Hierzu können die Behältermanipulatoren 11, 12, 13 in und/oder entgegen der Einlaufrichtung ER / Auslaufrichtung AR angetrieben sein, im Bereich der Reihenschieber 9, 10 aber auch zumindest abschnittsweise schräg diesbezüglich verlaufen.

Die quer zur Pufferrichtung PR ausgerichtete Bewegungskomponenten BK dient zum gezielten Abbremsen oder Beschleunigen der Behälter 2 im Einlaufbereich 5 und/oder Auslaufbereich 6 oder zum Einteilen, Gruppieren und/oder Verteilen der Behälter 2 im Bereich der Pufferfläche 3 zwischen Einlaufbereich 5 und Auslaufbereich 6.

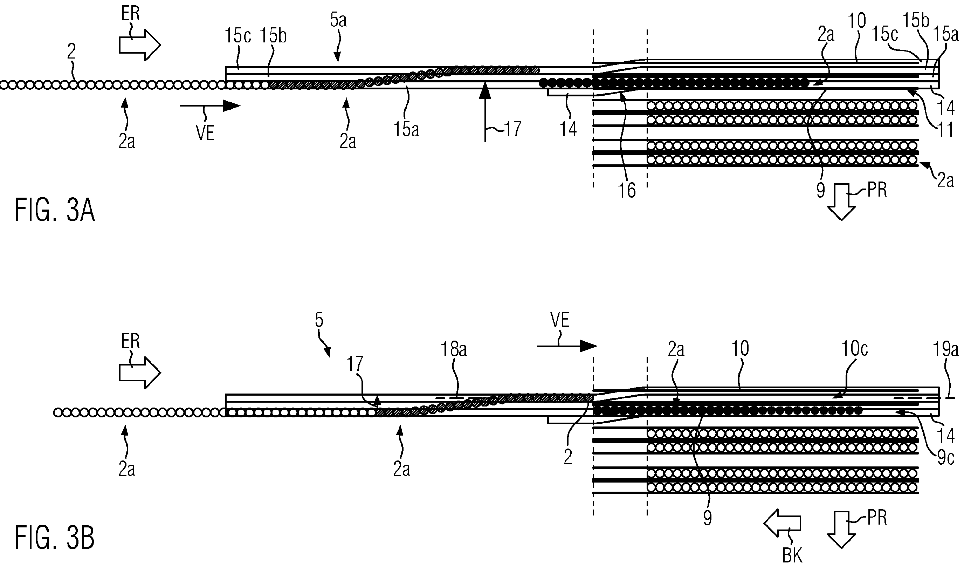

Wie die Figuren 3A bis 3F in der schematischen Draufsicht auf den Einlaufbereich 5 verdeutlichen, kann der einlaufseitige Behältermanipulator 11 im Wesentlichen von einem getrennt vom Einlaufförderband 5a und intermittierend angetriebenen Abbremsband 14 gebildet werden.

Das Einlaufförderband 5a ist demnach mehrbahnig ausgebildet, sodass prinzipiell mehrere Behälterreihen 2a nebeneinander auf dem Einlaufförderband 5a transportiert werden könnten. In der Praxis werden die Behälter 2 jedoch auf dem Einlaufförderband 5a als einreihiger und im Wesentlichen in Einlaufrichtung ER lückenloser Behälterstrom zugeführt. Im Beispiel umfasst das Einlaufförderband 5a drei nebeneinander verlaufende Behälterbahnen 15a, 15b, 15c.

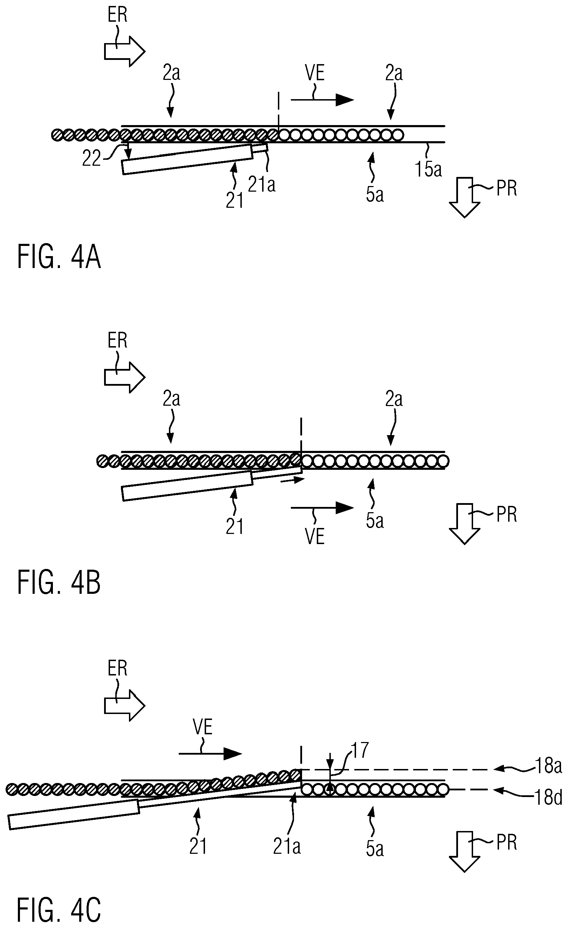

Wie die Figur 3A in der Übersicht erkennen lässt und ferner in den Figuren 4A bis 4F im Ablauf dargestellt ist, werden die Behälter 2 seitlich entgegen der Pufferrichtung PR von einer diesbezüglich vorderen Behälterbahn 15a auf eine diesbezüglich hintere Behälterbahn 15c versetzt und dadurch zu zeitlich und in Einlaufrichtung ER lückenlos aneinander anschließenden Behälterreihen 2a gruppiert.

Das Abbremsband 14 grenzt unterhalb der Reihenschieber 9, 10 in Form eines schräg zur Einlaufrichtung ER verlaufenden Bandübergangs 16 an die vordere Behälterbahn 15a an. Die Behälterbahnen 15a bis 15c und das Abbremsband 14 folgen demnach insgesamt einem im Wesentlichen S-förmigen Verlauf, wobei das Abbremsband 14 stromabwärts des Bandübergangs 16 in Verlängerung der vorderen Behälterbahn 15a verläuft.

Das Abbremsband 14 kann vorzugsweise zwischen Stillstand und der Einlaufgeschwindigkeit VE des Einlaufförderbands 5a beschleunigt und abgebremst werden. Prinzipiell wäre es auch denkbar, dass das Abbremsband 14 in einem Geschwindigkeitsbereich von 10% bis 90% der Einlaufgeschwindigkeit VE betrieben wird (also nicht vollständig bis zum Stillstand abgebremst wird und nicht vollständig bis zur Einlaufgeschwindigkeit VE beschleunigt wird). Auch damit wäre der nachfolgend beschriebene Ablauf prinzipiell möglich.

Demnach zeigt die Figur 3A einen Zustand, bei dem eine (in Einlaufrichtung ER) vordere Behälterreihe 2a von der (in Pufferrichtung PR) vorderen Behälterbahn 15a über den Bandübergang 16 auf das vorzugsweise mit der Einlaufgeschwindigkeit VE laufende Abbremsband 14 in den vorderen Reihenschieber 9 eines Shuttles 7 einläuft. Die zeitlich und in Einlaufrichtung ER lückenlos nachfolgende (hier mittlere) Behälterreihe 2a wird auf dem Einlaufförderband 5a auf geeignete Weise auf die Behälterbahnen 15a bis 15c durch einen Versatz 17 entgegen der Pufferrichtung PR verschoben, wie ausführlich unter Bezugnahme auf die Figuren 4A bis 4F beschrieben wird.

Der Vollständigkeit halber ist eine weitere (hier hintere) Behälterreihe 2a dargestellt, die noch Bestandteil des lückenlosen Behälterstroms ist und in der Folge ebenso wie nachfolgend beschrieben eingespeichert wird.

Die Figur 3B zeigt einen Zustand, bei dem die vordere Behälterreihe 2a vollständig in den vorderen Reihenschieber 9 eingelaufen ist, so dass das Abbremsband 14 unmittelbar anschließend gegenüber der Einlaufgeschwindigkeit VE verlangsamt wird, um die vordere Behälterreihe 2a im vorderen Reihenschieber 9 sukzessive abzubremsen.

Hierbei werden die Behälter 2 im Führungskanal 9c des vorderen Reihenschiebers 9 beidseitig geführt, so dass das Abbremsen und weiter Einspeichern der Behälter 2 trotz des schrägen Bandverlaufs am Bandübergang 16 und eines anschließenden Vorschubs der Reihenschieber 9, 10 in Pufferrichtung PR ungehindert möglich ist.

Ferner ist zu erkennen, dass der vorderste Behälter 2 der mittleren Behälterreihe 2a durch den Versatz 17 entgegen der Pufferrichtung PR in eine erste Einlaufposition 18a versetzt wurde, die mit einer ersten Vorschubposition 19a des zugeordneten hinteren Reihenschiebers 10 beim dortigen Eintreffen des vordersten Behälters 2 fluchtet. Das Shuttle 7 mit den Reihenschiebern 9, 10 ist hierbei vorübergehend ortsfest an der Vorschubposition 19a.

Das Abbremsen des Abbremsbands 14 beginnt vorzugsweise unmittelbar nach dem in der Figur 3B dargestellten Zeitpunkt, nämlich sobald die Behälterreihe 2a vollständig in den vorderen Reihenschieber 9 eingelaufen ist und alle Behälter 2 der Behälterreihe 2a beim Abbremsen im Reihenschieber 9 seitlich geführt sind.

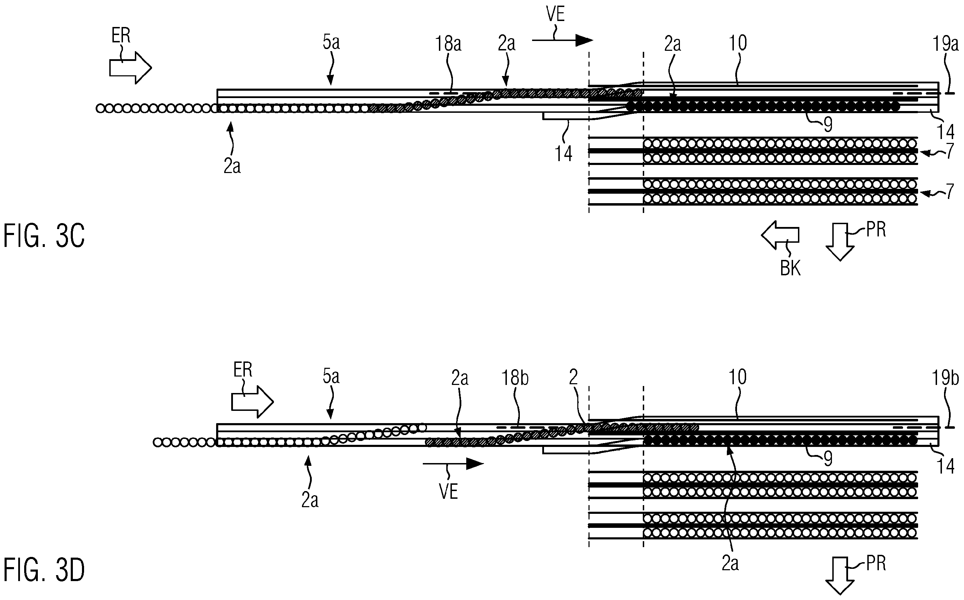

Die Figur 3C zeigt einen Zustand, bei dem das Abbremsband 14 auf die Hälfte der Einlaufgeschwindigkeit VE abgebremst wurde. Demnach befinden sich die Reihenschieber 9, 10 noch an der (in der Figur 2B dargestellten) ersten Vorschubposition 19a, so dass alle Behälter 2 der nachfolgenden Behälterreihe 2a mit der zuvor eingestellten ersten Einlaufposition 18a in den derart positionierten hinteren Reihenschieber 10 einlaufen können.

Wie insbesondere in der Figur 3C zu erkennen ist, ermöglicht der schräge Bandübergang 16, dass die mit der Einlaufgeschwindigkeit VE nachfolgende mittlere Behälterreihe 2a nicht auf der vom Abbremsband 14 verlangsamten vorderen Behälterreihe 9 auflaufen und somit kollisionsfrei in den Führungskanal 10c des hinteren Reihenschiebers 10 einlaufen kann.

Dies ist in der Figur 3D für die vollständig in den vorderen Reihenschieber 9 eingelaufene vordere Behälterreihe 2a bei mittlerweile stillstehendem Abbremsband 14 dargestellt. Demnach hat sich das Shuttle 7 mit den Reihenschiebern 9, 10 in Pufferrichtung PR geringfügig in eine zweite Vorschubposition 19b weiterbewegt, so dass nun ein Behälter 2 mit einer damit fluchtenden zweiten Einlaufposition 18b in den hinteren Reihenschieber 10 einläuft. Währenddessen schiebt der vordere Reihenschieber 9 die zuvor bereits vollständig eingelaufene Behälterreihe 2a in Pufferrichtung PR vom stillstehenden Abbremsband 14 weiter in Richtung der Pufferfläche 3.

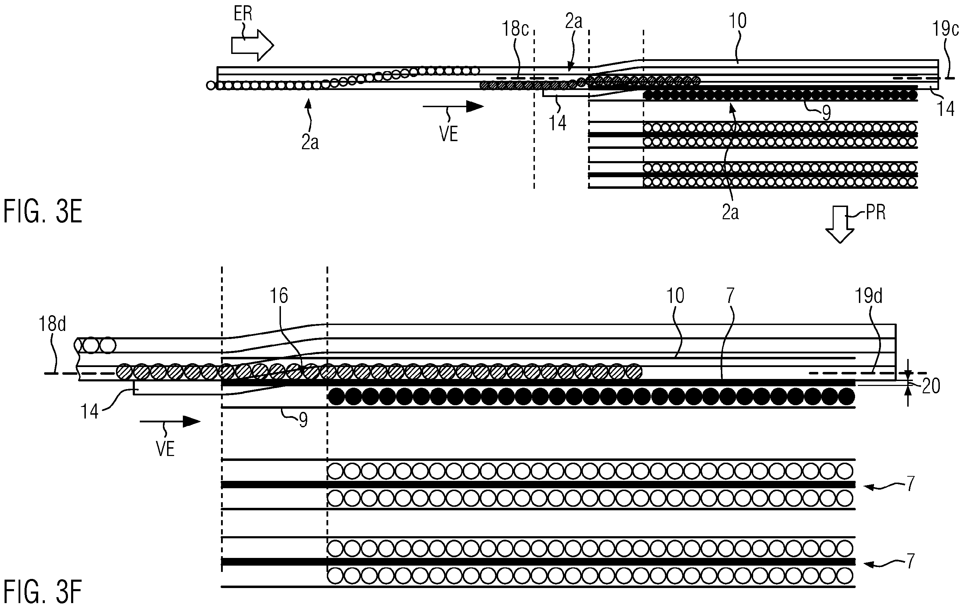

Die Figur 3E zeigt einen Zustand, nachdem der vordere Reihenschieber 9 mit der darin eingespeicherten vorderen Behälterreihe 2a den Bereich des Abbremsbands 14 verlassen hat und das Abbremsband wieder auf die Einlaufgeschwindigkeit VE beschleunigt werden kann.

Ferner ist zu erkennen, dass mittlerweile ein Behälter 2 der mittleren Behälterreihe 2a mit einer dritten Einlaufposition 18c in den mittlerweile an eine dritte Vorschubposition 19c entsprechend vorgeschobenen hinteren Reihenschieber 10 einläuft.

Die Figur 3F zeigt schließlich einen Zustand, bei dem das Abbremsband 14 wieder mit der Einlaufgeschwindigkeit VE läuft und das Shuttle 7 mit den Reihenschiebern 9, 10 in einer vorübergehend stationären vierten Vorschubposition 19d angehalten wurde. Entsprechend laufen die hintersten Behälter 2 der mittleren Behälterreihe 2a an einer damit fluchtenden vierten Einlaufposition 18d in den hinteren Reihenschieber 10 ein.

In der Figur 3F ist femer schematisch und nicht größenmaßstäblich angedeutet, dass im Bereich des Abbremsbands 14 zwischen den Führungskanälen 9c, 10c der Reihenschieber 9, 10 stets ein Abstand 20 eingehalten wird, der eine ausreichende antriebstechnische Entkopplung in Pufferrichtung PR benachbarter Behälterreihen 2a in den Reihenschiebern 9, 10 ermöglicht. Der Abstand 20 beträgt vorzugsweise wenigstens 80% des Durchmessers 2b (siehe Figur 1) der Behälter 2.

Folglich wird immer nur eine der Behälterreihen 2a vom Abbremsband 14 mit der abbremsenden Bewegungskomponenten BK beaufschlagt (gemäß dem dargestellten Ablauf in den Figuren 3B und 3C).

Wie die Figuren 3A bis 3F verdeutlichen, kann ein zeitlich und in Einlaufrichtung ER lückenlos einlaufender Behälterstrom mithilfe der vom ersten Behältermanipulator 11 quer zur Pufferrichtung PR verursachten Bewegungskomponente BK kontinuierlich auf in Pufferrichtung PR aufeinanderfolgende Reihenschieber 9, 10 aufgeteilt werden.

Das Abbremsband 14 ermöglicht insbesondere durch den schrägen Bandübergang 16 nicht nur eine geeignete Anpassung des zeitlichen Ablaufs beim Einspeichern und einen ruckfreien Einlauf der Behälter 2 in die Reihenschieber 9, 10, sondern vermeidet auch Kollisionen der aufeinanderfolgenden Behälterreihen 2a während des Abbremsens. Beschädigungen und ein Umfallen der Behälter 2 können so beim Einspeichern in die Reihenschieber 9, 10 zuverlässig vermieden werden.

Praktikabel sind zum Beispiel Verzögerungen von -0,2 bis -0,6 m/s² des Abbremsbands 14 beim Einlauf der Behälterreihen 2a in die Reihenschieber 9, 10.

Die Figuren 4A bis 4F verdeutlichen schematisch, wie der Versatz 17 entgegen der Pufferrichtung PR und damit die Einlaufpositionen 18a-18d der einzelnen Behälter 2 hergestellt werden können.

Demnach umfasst die Vorrichtung 1 zu diesem Zweck vorzugsweise eine Ablenkschiene 21, die in einem Winkel 22 schräg zur Einlaufrichtung ER entgegen der Pufferrichtung PR ausgefahren werden kann. Ferner kann das freie Ende 21a der Ablenkschiene 21 synchron in Einlaufgeschwindigkeit VE mit dem jeweils vordersten Behälter 2 einer Behälterreihe 2a mitbewegt werden.

Die Figur 4A zeigt einen Zustand bei vollständig eingefahrener Ablenkschiene 21. Deren freies Ende 21a ist hierbei nicht in Kontakt mit den auf der vorderen Behälterbahn 15a laufenden Behältern 2.

Die Figur 4B zeigt einen Zustand, bei dem die Ablenkschiene 21 bereits derart ausgefahren wurde, dass ihr freies Ende 21a die vordersten Behälter 2 der abzulenkenden Behälterreihe 2a entgegen der Pufferrichtung PR ablenkt. Hierbei läuft die Ablenkschiene 21 in Einlaufrichtung ER synchron mit den Behältern 2 mit.

Die Figur 4C zeigt einen Zustand mit vollständig ausgefahrener Ablenkschiene 21, wobei die Behälter 2 an der Ablenkschiene 21 schräg zur Einlaufrichtung ER entlanglaufen und an ihrem freien Ende 21a um einen maximalen Versatz 17 bezüglich ihrer ursprünglichen Bewegungsbahn versetzt werden.

Stromabwärts der Ablenkschiene 21 behalten die Behälter den jeweils erzeugten Versatz 17 bei und werden so zunächst mit einer auf diese Weise eingestellten Einlaufposition 18a auf dem Einlaufförderband 5a zum zugeordneten Reihenschieber 9, 10 transportiert (siehe die Figuren 3A bis 3C).

Von der Ablenkschiene 21 nicht abgelenkte Behälter 2 laufen dagegen ohne Versatz 17 an der entsprechenden Einlaufposition 18d zu den Reihenschiebern 9, 10 (siehe die Figur 3F).

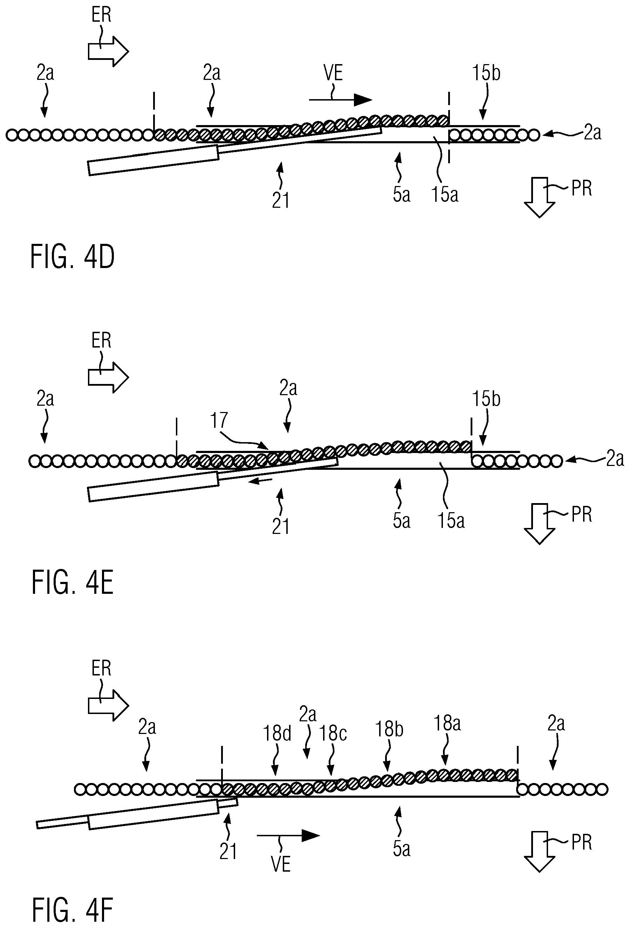

Die Figur 4D zeigt einen Zustand bei unveränderter Position der Ablenkschiene 21, unmittelbar bevor diese wieder sukzessive zurückgezogen wird.

Wie die Figur 4E erkennen lässt, führt ein anschließendes sukzessives Zurückziehen der Ablenkschiene 21 zu einer Reduzierung des Versatzes 17 für nachfolgende Behälter 2. Dadurch werden deren Einlaufpositionen 18b-18d an die entsprechenden Vorschubpositionen 19b-19d des zugeordneten Reihenschiebers 9, 10 zum jeweiligen Zeitpunkt des Behältereinlaufs in den Reihenschieber 9, 10 angepasst (siehe die Figuren 3D bis 3F).

Die Figur 4F zeigt die Ablenkscheine 21 wiederum in ihrer vollständig zurückgezogenen Stellung, so dass die letzten Behälter 2 der jeweiligen Behälterreihe 2a nicht mehr von der Ablenkschiene 21 abgelenkt werden und demnach an einer stationären Vorschubposition 19d des zugeordneten Reihenschiebers 9, 10 in diesen einlaufen können.

Wie insbesondere die Figur 4F erkennen lässt, können mit dem Versatz 17 unterschiedliche Einlaufpositionen 18a-18d sowohl für vorübergehend konstante Vorschubpositionen 19a, 19d der Reihenschieber 9, 10 als auch für sich kontinuierlich ändernde Vorschubpositionen 19b, 19c hergestellt werden. Damit können geeignete Einlaufpositionen 18a-18d der Behälter 2 für unterschiedliche Bewegungsabläufe beim Einspeichern in die Reihenschieber 9, 10 je nach Steuerung der Ablenkschiene 21 erzeugt werden.

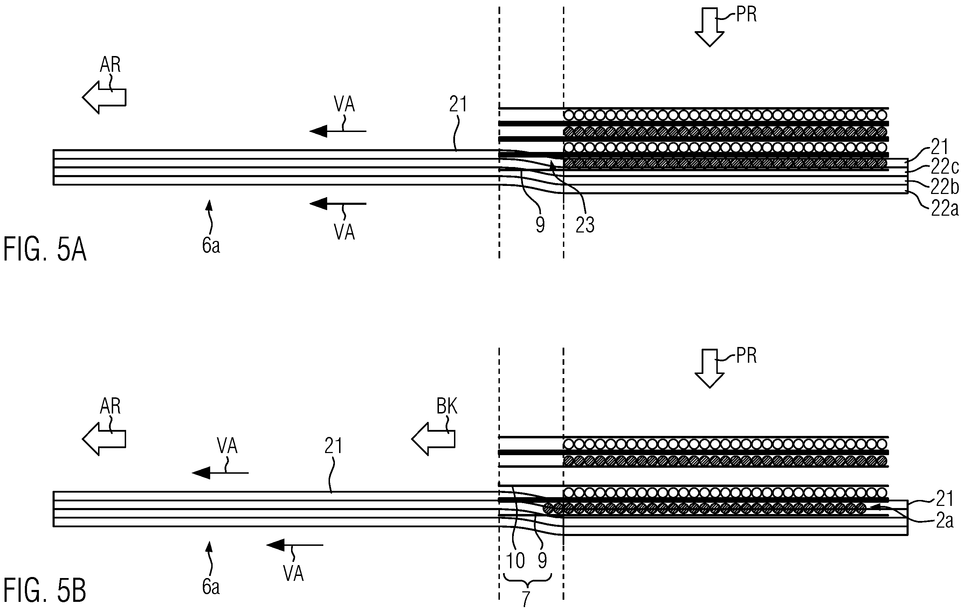

Wie die Figuren 5A bis 5F in der schematischen Draufsicht auf den Auslaufbereich 6 verdeutlichen, kann der auslaufseitige Behältermanipulator 12 zum Erzeugen der Bewegungskomponente BK von einem getrennt vom Auslaufförderband 6a und intermittierend angetriebenen Beschleunigungsband 21 gebildet werden.

Demnach ist auch das Auslaufförderband 6a vorzugsweise mehrbahnig ausgebildet, beispielsweise mit einer in Pufferrichtung PR vorderen Behälterbahn 22a, einer mittleren Behälterbahn 22b und einer hinteren Behälterbahn 22c, an die das Beschleunigungsband 21 an einem schräg bezüglich der Auslaufrichtung AR verlaufenden auslaufseitigen Bandübergang 23 im Bereich der Reihenschieber 9, 10 anschließt.

Wie die Figur 5A diesbezüglich erkennen lässt, läuft zunächst eine vorauslaufende Behälterreihe 2a im zugehörigen vorderen Reihenschieber 9 sowohl über das Beschleunigungsband 21 als auch über die mittlere und hintere Behälterbahn 22b, 22c des Auslaufförderbands 6a, wobei sowohl das Auslaufförderband 6a als auch das Beschleunigungsband 21 mit derselben Auslaufgeschwindigkeit VA angetrieben sind.

Wie die Figur 5B verdeutlicht, wird daher zunächst die vorauslaufende Behälterreihe 2a durch Vorschub auf das Beschleunigungsband 21 und das Auslaufförderband 6a durch die Bewegungskomponente BK in Auslaufrichtung AR beschleunigt und aus dem vorderen Reihenschieber 9 ausgeleitet.

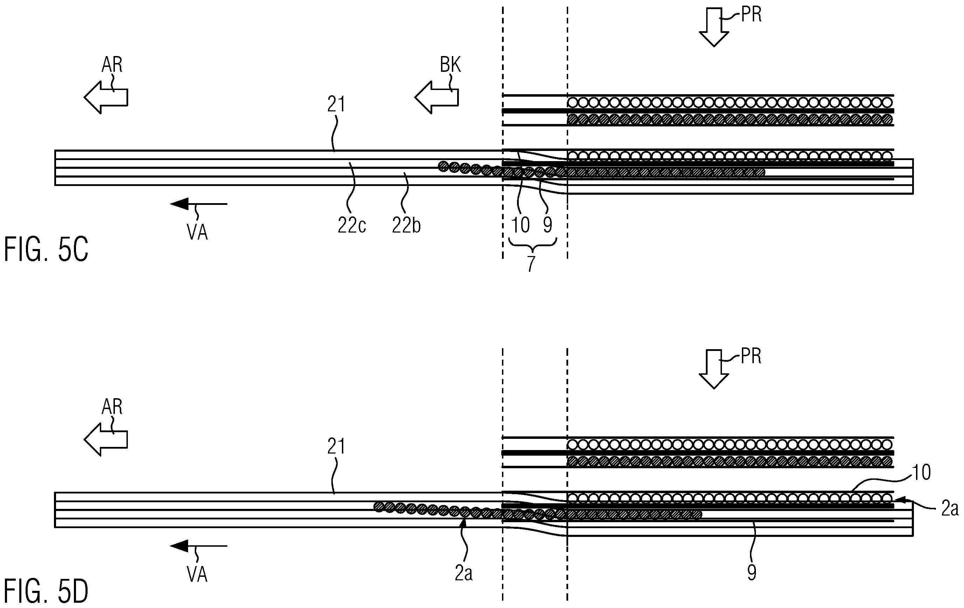

Die Figur 5C lässt erkennen, dass das Shuttle 7 mit den Reihenschiebern 9, 10 dabei weiter in Pufferrichtung PR vorgeschoben und die vorauslaufende Behälterreihe 2a dadurch im vorderen Reihenschieber 9 auf die mittlere und hintere Behälterban 22b, 22c geschoben und somit vom Auslaufförderband 6a übernommen wird.

In der Figur 5D ist ein Zustand dargestellt, bei dem das Beschleunigungsband 21, nachdem die vorauslaufende Behälterreihe 2a dessen Bereich verlassen hat, vorzugsweise bis zum Stillstand abgebremst wird, so dass die im hinteren Reihenschieber 10 nachrückende Behälterreihe 2a zunächst noch nicht in Auslaufrichtung AR beschleunigt wird.

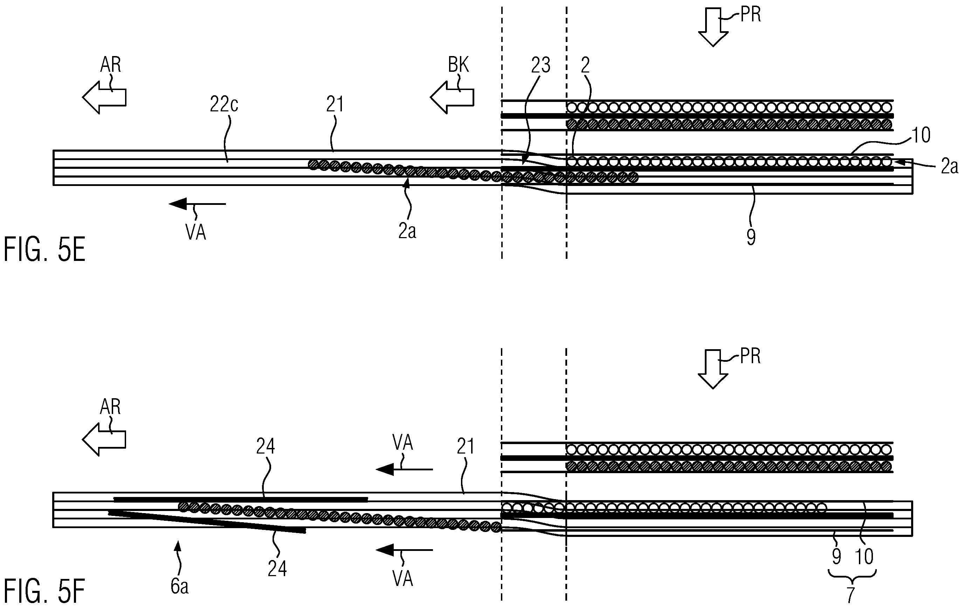

Die Figur 5E zeigt einen Zustand, an dem das Beschleunigungsband 21 bereits auf die Hälfte der Auslaufgeschwindigkeit VA des Auslaufförderbands 6a beschleunigt wurde, um die nachgerückte Behälterreihe 2a mittels der Bewegungskomponente BK möglichst so zu beschleunigen, dass jeder ihrer Behälter 2 am Bandübergang 23 die Auslaufgeschwindigkeit VA des Auslaufförderbands 6a erreicht hat und so von deren hinterer Behälterbahn 22c übernommen wird.

Hierbei sind die Behälter 2 im Führungskanal 10c des hinteren Reihenschiebers 10 in Auslaufrichtung AR geführt trotz des diesbezüglich schrägen Verlaufs des Beschleunigungsbands 21 und der angrenzenden hinteren Behälterbahn 22c am Bandübergang 23.

Die Figur 5F zeigt schließlich einen Zustand, an dem das Beschleunigungsband 21 die Auslaufgeschwindigkeit VA des Auslaufförderbands 6a erreicht hat.

Demnach wird der zeitliche Ablauf der Beschleunigung so angepasst, dass die aus dem hinteren Reihenschieber 10 unter Beschleunigung des Beschleunigungsband 21 auslaufende Behälterreihe 2a zeitlich und in Auslaufrichtung AR lückenlos an die aus dem vorderen Reihenschieber 9 bereits zuvor ausgelaufene Behälterreihe 2a anschließt.

Die Figur 5F deutet zudem schematisch an, dass stromabwärts des auslaufseitigen Bandübergangs 23 Ablenkschienen 24 stationär über dem Auslaufförderband 6a angeordnet werden können, um die zeitlich und in Auslaufrichtung lückenlos aneinander anschließenden Behälterreihen 2a zu einem in Auslaufrichtung AR fluchtenden (einbahnigen) Behälterstrom zusammenzuführen.

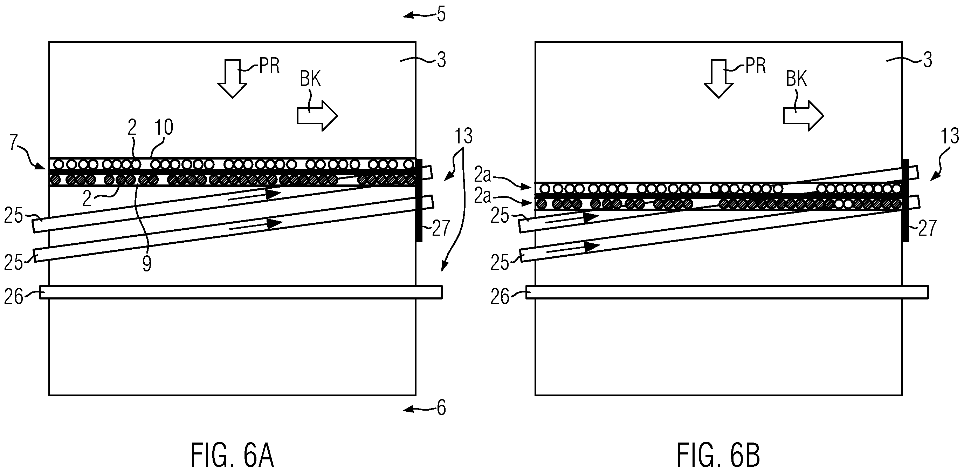

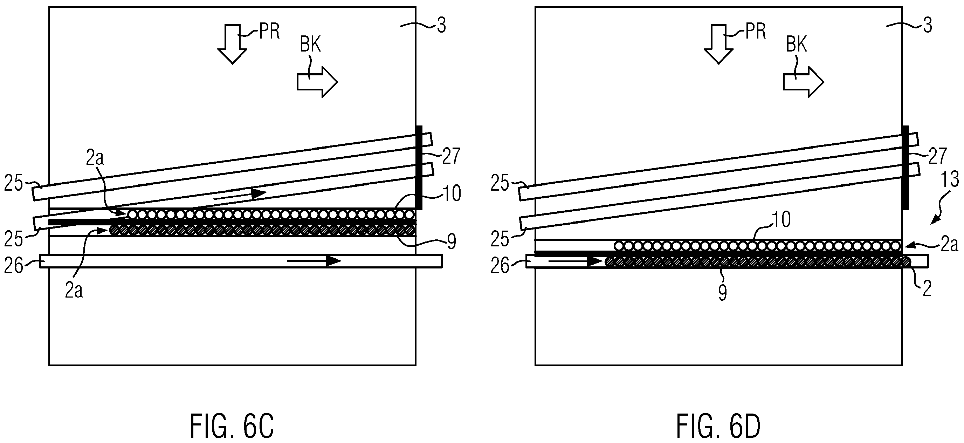

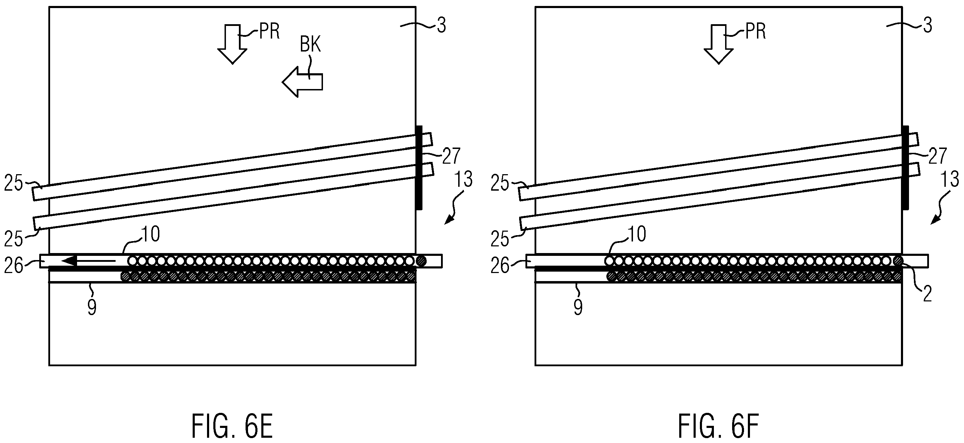

Wie die Figuren 6A bis 6F in der schematischen Draufsicht auf die Pufferfläche 3 verdeutlichen, kann ein darin integrierter Behältermanipulator 13 zum Erzeugen der Bewegungskomponente BK in einem Bereich der Pufferfläche 3 zwischen Einlaufbereich 5 und Auslaufbereich 6 wenigstens ein schräg bezüglich der Pufferrichtung PR verlaufendes Gruppierungsband 25 und/oder orthogonal zur Pufferrichtung PR verlaufendes Gruppierungsband 26 umfassen.

Gemäß Figur 6A bis 6C sind schräg verlaufende Gruppierungsbänder 25 vorzugsweise unidirektional und schräg entgegen der Pufferrichtung PR auf einen Anschlag 27 hin angetrieben. Dadurch werden Behälter 2 innerhalb eines Reihenschiebers 9, 10 bei Vorschub in Pufferrichtung PR umso früher vom jeweiligen Gruppierungsband 25 erfasst, je geringer der Abstand der Behälter vom Anschlag 27 ist. Somit können die Behälter 2 einer Behälterreihe 2a nacheinander mit der Bewegungskomponente BK quer zur Pufferrichtung PR beaufschlagt werden, so dass die Behälter 2 schließlich ausgehend vom Anschlag 27 nacheinander anschlagen und dadurch lückenlos aneinandergeschoben werden. Behälterreihen 2a können somit gegebenenfalls innerhalb von Reihenschiebern 9, 10 lückenlos geschlossen werden.

Demgegenüber ist das orthogonal angeordnete Gruppierungsband 26 vorzugsweise bidirektional angetrieben und erstreckt sich seitlich über die Pufferfläche 3 hinaus. Wie in den Figuren 6D bis 6F zu erkennen ist, können überzählige Behälter 2 einer Behälterreihe 2a auf diese Weise beispielsweise aus einem vorderen Reihenschieber 9 aus der Pufferfläche 3 herausgefahren und in einen anderen Reihenschieber, beispielsweise in einen hinteren Reihenschieber 10 eingefahren werden, um fehlende Behälter 2 einer Behälterreihe 2a aufzufüllen, also die Anzahl der Behälter 2 pro gepufferter Behälterreihe 2a bzw. pro Reihenschieber 9, 10 aneinander anzugleichen.

Die Bewegungskomponente BK quer zur Pufferrichtung PR wechselt hierbei die Richtung, was schematisch durch einen entsprechenden Blockpfeil angedeutet ist.

Somit eignen sich die einlaufseitigen / auslaufseitigen Behältermanipulatoren 11, 12 mit Abbremsbändern 14 / Beschleunigungsbändern 21 vorrangig zum Optimieren des Einspeichems / Ausspeicherns und die dazwischen angeordneten Behältermanipulatoren 13 mit Gruppierungsbändern 25, 26 vorrangig zum Optimieren der Behälterverteilung innerhalb einzelner Behälterreihen 2a oder auch zwischen einzelnen Behälterreihen 2a.

Dadurch, dass die Behälter 2 in den Reihenführungen 9, 10 sowohl in Pufferrichtung PR als auch entgegen der Pufferrichtung PR seitlich geführt sind, resultiert eine Beschleunigung / Verzögerung sowohl in und entgegen der Einlaufrichtung ER / Auslaufrichtung AR als auch schräg dazu in einer Bewegungskomponente BK quer zur Pufferrichtung PR.

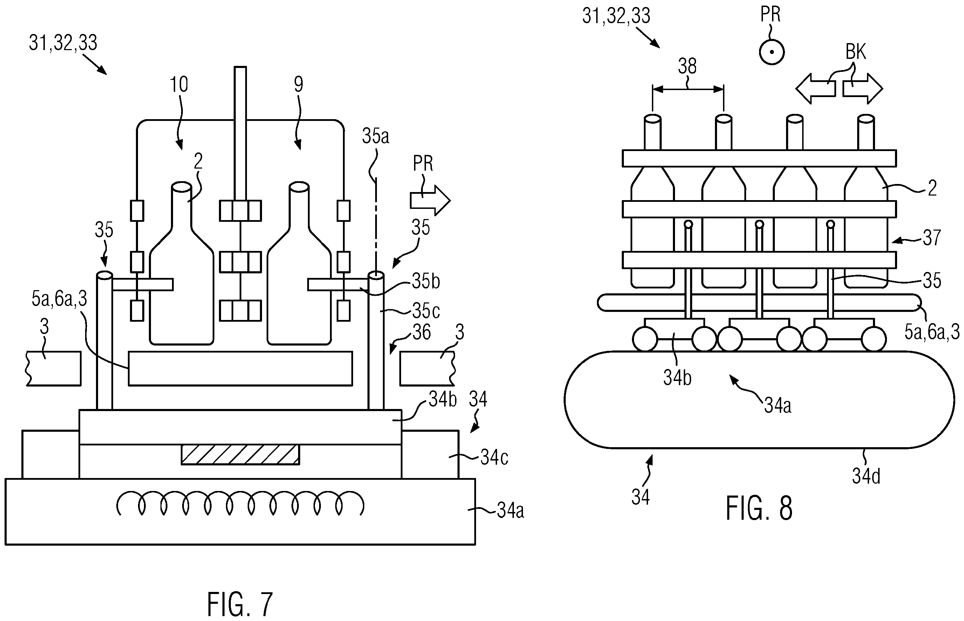

In den Figuren 7 bis 9 ist schematisch eine weitere Ausführungsform eines einlaufseitigen Behältermanipulators 31, eines auslaufseitigen Behältermanipulators 32 und eines dazwischen in die Pufferfläche 3 integrierten Behältermanipulators 33 zur Erzeugung einer zusätzlichen Bewegungskomponente BK quer zur Pufferrichtung PR dargestellt.

Der Behältermanipulator 31, 32, 33 kann demnach ein entlang des Einlaufförderbands 5a und/oder des Auslaufförderbands 6a und somit quer zur Pufferrichtung PR verlaufendes lineares Fördermittel 34 umfassen, das unterhalb des Einlaufförderbands 5a, des Auslaufförderbands 6a und der Pufferfläche 3 angeordnet ist.

Der Behältermanipulator 31, 32, 33 umfasst dann ferner am Fördermittel 34 quer zur Pufferrichtung PR verschiebbare Mitnehmer 35, die in die Reihenschieber 9, 10 um jeweils eine vertikale Achse 35a eingeschwenkt werden können. Zu diesem Zweck können die Mitnehmer 35 im Wesentlichen horizontal ausgerichtete Mitnehmerfinger 35b und im Wesentlichen vertikal ausgerichtete Schwenkwellen 35c umfassen.

Die am Fördermittel 34 befestigten Mitnehmer 35 ragen jeweils durch einen entlang des Einlaufförderbands 5a und/oder des Auslaufförderbands 6a und/oder quer in der Pufferfläche 3 verlaufenden Durchgriffsschlitz 36 nach oben in den Bereich der Reihenschieber 9, 10.

Das lineare Fördermittel 34 kann beispielsweise als linearer Induktionsmotor ausgebildet sein mit einem Langstator 34a und davon einzeln angetriebenen Schlitten 34b, an denen vorzugsweise jeweils ein Mitnehmer 35 befestigt ist. Die Schlitten 34b können auf Führungs-/ Laufrollen 34c am Langstator 34a auf prinzipiell bekannte Weise entlanglaufen.

Die Reihenschieber 9, 10 weisen dann vorzugsweise horizontal verlaufende Durchgriffsschlitze 37 auf, durch die die Mitnehmer 35 in die Reihenschieber 9, 10 eingeschwenkt werden können.

Wie die Figur 8 erkennen lässt, können die Mitnehmer 35 vorzugsweise zwischen einzelne Behälter 2 einer Behälterreihe 2a individuell eingeschwenkt werden. Es ist jedoch auch möglich, mehrere Behälter 2 der Behälterreihe 2a im Sinne einer Untergruppe gemeinsam durch je einen Mitnehmer 35 mit der quer zur Pufferrichtung PR verlaufenden Bewegungskomponenten BK zu beaufschlagen. Dies ist in der Figur 8 ebenso schematisch angedeutet wie eine Umlaufbahn 34d des Fördermittels 34, entlang der die Schlitten 34b aus dem Bereich der Pufferfläche 3 und der Reihenschieber 9, 10 entfernt und anschließend wieder neu positioniert werden können.

Durch Einschwenken der Mitnehmer 35 können die Behälter 2 einzeln oder gruppenweise quer zur Pufferrichtung PR manipuliert werden. Somit können sowohl gegebenenfalls vorhandenen Lücken zwischen den Behältern 2 geschlossen werden oder derartige Lücken bei Bedarf auch erzeugt werden, um eine Transportteilung 38 der Behälter 2 quer zur Pufferrichtung PR für den späteren Auslauf der Behältergruppen 2a herzustellen oder aus diesen Untergruppen zu formieren entsprechend einer Anordnung der Behälter 2 in einem herzustellenden Gebinde.

Es ist auch denkbar, die Bewegungskomponente BK mit mehreren antriebstechnisch aneinander gekoppelten Schlitten 34b zu erzeugen, wobei die Mitnehmer 35 dann nicht zwangsläufig an jedem Schlitten 34b in die Reihenschieber 9, 10 eingeschwenkt werden müssten. Beispielsweise könnte eine Untergruppe 2c mehrerer Behälter 2 durch einen einzigen Mitnehmer 35 mit der Bewegungskomponente BK beaufschlagt werden, um die Behälter 2 im Reihenschieber 9, 10 lückenlos zusammenzuschieben und/oder zu verschieben. Das dafür nötige Antriebsmoment kann dann von mehreren antriebstechnisch aneinander gekoppelten Schlitten 34b erzeugt werden.

Derartige Funktionen lassen sich ebenso mit einem in den Puffertisch 3 zwischen dem Einlaufbereich 5 und dem Auslaufbereich 6 integrierten Behältermanipulator 33 verwirklichen. In diesem Fall kann die Konstruktion des Behältermanipulators 33 vereinfacht werden, da dann in dessen Bereich kein Einlaufförderband 5a / Auslaufförderband 6a zu berücksichtigen ist.

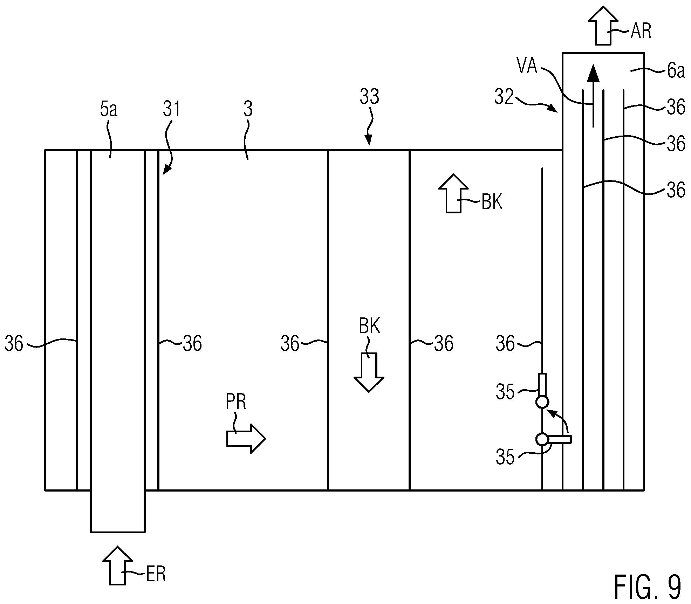

Die prinzipiellen Anordnungsmöglichkeiten der Behältermanipulatoren 31, 32, 33 sind in der Figur 9 schematisch angedeutet. Demnach kann der auslaufseitige Behältermanipulator 32 dazu verwendet werden, die Behälter 2 auf die Auslaufgeschwindigkeit VA des Auslaufförderbands 6a zu beschleunigen. Ebenso könnten die Behälter 2 so an die Fördergeschwindigkeit eines im Anschluss an das Auslaufförderband 6a ausgebildeten Förderbands beschleunigt werden.

Wie diesbezüglich in der Figur 9 angedeutet ist, werden die Durchgriffsschlitze 36 dann vorzugsweise in den Bereich des anschließenden Förderbands / Auslaufförderbands 6a soweit verlängert, dass die in die Auslaufrichtung AR zurückgeschwenkten Mitnehmer 35 am Umkehrpunkt des linearen Fördermittels 34 unter die jeweilige Transportebene abtauchen können.

Mit den Behältermanipulatoren 31, 32, 33 können die Behälterreihen 2a quer zur Pufferrichtung PR auf eine Transportteilung 38 gebracht werden, lückenlos aneinandergeschoben werden und/oder in Auslaufrichtung AR beschleunigt werden, um das Ausspeichern der Behälterreihen 2a zu optimieren.

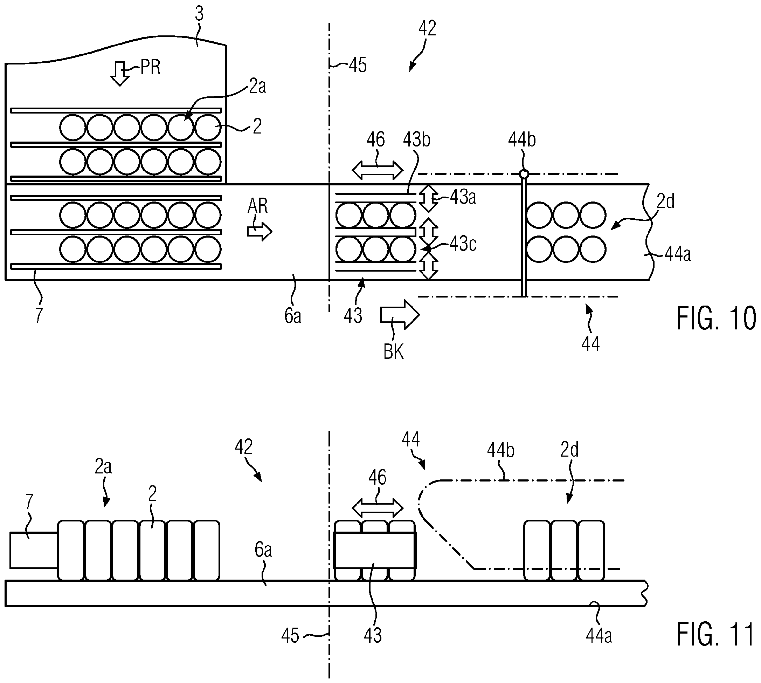

Die Figuren 10 bis 12 verdeutlichen schematisch einen weiteren auslaufseitigen Behältermanipulator 42 mit wenigstens einem in und entgegen der Auslaufrichtung AR oszillierend bewegbaren Schlitten 43, der zum gesteuerten Festhalten / zur gesteuerten Freigabe einer aus den Behälterreihen 2a auslaufseitig gebildeten Gruppe 2d ausgebildet ist. Die Gruppen 2d entsprechen beispielsweise stromabwärts der Vorrichtung 1 herzustellenden Gebinden. Beispielhaft dargestellt ist beispielsweise eine Gruppe 2d bestehend aus sechs Behältern 2.

Demnach ist der Behältermanipulator 42 derart am Auslaufbereich 6 der Vorrichtung 1 angeordnet, dass der Schlitten 43 die Behälter vom Auslaufförderband 6a übernehmen und an eine in Auslaufrichtung AR anschließende Förderstrecke 44 übergeben kann. Diese umfasst beispielsweise ein Förderband 44a und eine Schubkette 44b. Die Förderstrecke 44 stellt vorzugsweise die Verbindung zu einer stromabwärts angeordneten Verpackungsmaschine (nicht dargestellt) für die Behälter 2 her und läuft in der Regel schneller als das Auslaufförderband 6a.

Der Schlitten 43 umfasst Fixierelemente 43a, wie beispielsweise Klemmleisten 43b und dazwischen ausgebildete Aufnahmekanäle 43c, für die aus den Reihenschiebern 9, 10 auslaufenden Behälter 2. Die Aufnahmekanäle 43c können von den Klemmleisten 43b derart verengt werden, dass die in den Schlitten 43 eingelaufenen Behälter 2 festgehalten werden und in Auslaufrichtung AR über eine Schnittstelle 45 zwischen dem Auslaufförderband 6a und der anschließenden Förderstrecke 44 hinweg versetzt werden. Hierbei werden sie mithilfe der Bewegungskomponente BK quer zur Pufferrichtung PR vorzugsweise auf die Fördergeschwindigkeit der Förderstrecke 44 beschleunigt.

Nach Freigabe der Behälter 2 im Bereich der anschließenden Förderstrecke 44 durch entsprechende Erweiterung der Aufnahmekanäle 43b kann der Schlitten 43 entgegen der Auslaufrichtung AR wieder in den Bereich des Auslaufförderbands 6a zurückbewegt werden. Daraus ergibt sich insgesamt eine oszillierende Bewegung 46 des Schlittens 43 in und entgegen der Auslaufrichtung AR.

Die Klemmleisten 43b können beispielsweise als Luftkissen ausgebildet sein, die sich gesteuert aufblasen und wieder entspannen lassen. Es wären aber auch andere Fixierelemente 43a zum Festhalten der Behälter 2 am Schlitten 43 denkbar, beispielsweise Sauggreifer, Greifertulpen für die Mündungsbereiche der Behälter 2 oder dergleichen. Auch könnten anderweitige Klemmleisten 43b an den Schlitten angeordnet sein und geeignet aufeinander zu bewegt werden, um die Behälter 2 auf am Schlitten 43 festzuhalten und wieder freizugeben.

Es könnten auch mehrere Auslaufförderbänder 6a und diesen jeweils zugeordnete Schlitten 43 in Auslaufrichtung AR nebeneinander angeordnet sein, um eine entsprechende Anzahl von Gruppen 2d den stromabwärts herzustellenden Gebinden entsprechend auszuspeichern.

Der auslaufseitige Behältermanipulator 42 macht ansonsten benötigte, nebeneinander angeordnete Transportbänder für einzelne Transportgassen entbehrlich und ermöglicht einen staudruckfreien Einlauf in eine stromabwärts angeordnete Verpackungsmaschine. Zudem können Behälter 2 mit gegebenenfalls nicht rotationssymmetrischen Querschnitten vergleichsweise einfach ausgespeichert werden und flexibel und mit erhöhter Standsicherheit auf der anschließenden Transportstrecke 44 befördert werden. Dadurch lässt sich die Funktionssicherheit erhöhen und Behälterbeschädigung durch Staudruck vermeiden.

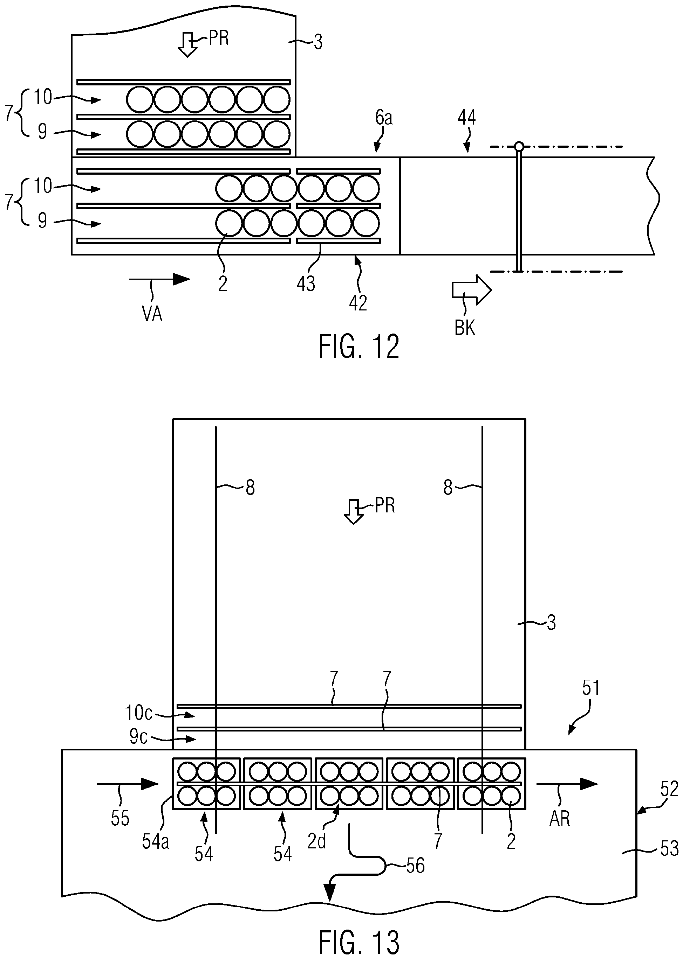

Die Figur 13 zeigt schematisch einen alternativen Auslaufbereich 51, in dem sich ein Planarmotorsystem 52 in Pufferrichtung PR an die Pufferfläche 3 anschließt.

Das Planarmotorsystem 52 umfasst eine aktive Antriebsfläche 53 bestehend aus Planarkacheln oder dergleichen und von der Antriebsfläche 53 planar, also zweidimensional, angetriebene Planarmotorläufer 54. Derartige Planarmotorsysteme 52 ermöglichen eine ruckfreie und berührungsfreie Bewegung der freischwebenden Planarmotorläufer 54 auf der Antriebsfläche 53, in der zu diesem Zweck Wandermagnetfelder auf prinzipiell bekannte Weise erzeugt werden.

Die einzelnen Planarmotorläufer 54 können demnach vorzugsweise in einer quer zur Pufferrichtung 3 verlaufenden Anfahrrichtung 55 an die Pufferfläche 3 herangefahren werden. Die Planarmotorläufer 54 umfassen ferner Ladeflächen 54a, die zumindest näherungsweise mit der Pufferfläche 3 fluchten, sodass die Behälterreihen 2a von den Reihenschiebern 9, 10 auf die Ladeflächen 54a der Planarmotorläufer 54 geschoben werden können.

Die derart mit den Behälterreihen 2a beladenen Planarmotorläufer 54 werden dann vorzugsweise in Auslaufrichtung AR, also quer zur Pufferrichtung PR und in Anfahrrichtung 55, weggefahren. In diesem Fall können die Reihenschieber 9, 10 stationär im Auslaufbereich 51, also über dem Planarmotorsystem 52, bis zur ihrer Entleerung warten.

Alternativ wäre es denkbar, die Reihenschieber 9, 10 nach Überschieben der Behälter 2 auf die Planarmotorläufer 54 von den Behältern 2 soweit anzuheben, dass diese vollständig von den Reihenschiebern 9, 10 freigegeben werden und die beladenen Planarmotorläufer 54 in Pufferrichtung PR, also quer zu den Führungskanälen 9c, 10c der Reihenschieber 9, 10 von der Pufferfläche 3 wegbewegt werden können.

Die Planarmotorläufer 54 können auf der Antriebsfläche 53 anschließend unabhängig voneinander bewegt werden, beispielsweise entlang Kurven 56, um die Behälter 2 beispielsweise in Gruppen 2d auf geeignete Weise zur weiteren Verarbeitung, beispielsweise zur Verpackung, zu verteilen.

Prinzipiell wäre es auch denkbar, den Auslaufbereich 6 mit wenigstens einem Auslaufförderband 6a und den Auslaufbereich 51 mit einem in Pufferrichtung PR anschließenden Planarmotorsystem 52 zu kombinieren. Beispielsweise könnten das Auslaufförderband 6a und die Planarmotorläufer 54 des Planarmotorsystems 52 in Abhängigkeit von bestimmten Füllgütern und/oder Behälterformaten abwechselnd und/oder in Kombination miteinander zum Ausspeichern der Behälter 2 verwendet werden.

## Patentansprüche

1. Verfahren zum Puffern von Behältern (2) in einer Behälterbehandlungsanlage insbesondere Abfüllanlage, wobei die Behälter einreihig mittels wenigstens eines Einlaufförderbands (5a) in einer Einlaufrichtung (ER) eingespeichert werden, auf einer sich quer anschließenden Pufferfläche (3) von schienengeführten und einzeln angetriebenen Shuttles (7) mit Reihenschiebern (9, 10) in einer zur Einlaufrichtung (ER) quer verlaufenden Pufferrichtung (PR) einreihig verschoben und mittels wenigstens eines sich in Pufferrichtung an die Pufferfläche anschließenden Auslaufförderbands (6a) in einer quer zur Pufferrichtung verlaufenden Auslaufrichtung (AR) oder mittels wenigstens eines an die Pufferfläche in Pufferrichtung anschließend heranfahrbaren und insbesondere zweidimensional angetriebenen Planarmotorläufers (54) ausgespeichert werden, **dadurch gekennzeichnet, dass** die Behälter beim Einspeichern und/oder Ausspeichern quer zur Pufferrichtung gesteuert bewegt und dadurch bezüglich des Einlaufförderbands / Auslaufförderbands abgebremst oder beschleunigt werden.

2. Verfahren nach Anspruch 1, wobei die Behälter auf dem Einlaufförderband (5a) zu in Einlaufrichtung (ER) insbesondere lückenlos aufeinander folgenden Behälterreihen (2a) gruppiert und während ihres jeweiligen Einlaufs in einen zugeordneten Reihenschieber (9, 10) auf einem sich verlangsamenden Abbremsband (14) von einer Einlaufgeschwindigkeit (VE) des Einlaufförderbands insbesondere bis zum Stillstand abgebremst werden, wobei der Reihenschieber die jeweilige Behälterreihe in Pufferrichtung (PR) vom Einlaufförderband über das Abbremsband schiebt, und wobei man das Abbremsband anschließend wieder beschleunigt und eine auf dem Einlaufförderband in Einlaufrichtung insbesondere lückenlos nachfolgende Behälterreihe (2a) auf das Abbremsband leitet.

3. Verfahren nach Anspruch 2, wobei die auf dem Einlaufförderband (5a) einlaufenden Behälter (2) entgegen der Pufferrichtung (PR) in Einlaufpositionen (18a-18d) abgelenkt werden, die mit der Vorschubposition (19a-19d) des zugeordneten Reihenschiebers (9, 10) zum Zeitpunkt des Einlaufs des jeweiligen Behälters in den Reihenschieber fluchten.

4. Verfahren nach Anspruch 3, wobei man die Behälter (2) mittels einer Ablenkschiene (21) ablenkt, die zuerst schräg zur Einlaufrichtung (ER) ausgefahren wird und sich dabei mit ihrem freien Ende (21a) mit dem jeweils vordersten Behälter der jeweiligen Behälterreihe (2a) in Einlaufgeschwindigkeit (VE) mitbewegt, die bei Erreichen der Einlaufposition (18a) des vordersten Behälters angehalten wird, und die den Einlaufpositionen (18b-18d) der jeweils nachfolgenden Behälter der Behälterreihe entsprechend wieder zurückgezogen wird.

5. Verfahren nach wenigstens einem der Ansprüche 2 bis 4, wobei zwischen aufeinanderfolgenden Behälterreihen (2a) im Bereich des Abbremsbands (14) ein Mindestabstand (20) von wenigstens 80% des Durchmessers (2b) der Behälter (2) in Pufferrichtung gesehen eingehalten wird.

6. Verfahren nach wenigstens einem der Ansprüche 2 bis 5, wobei die Behälter (2) in den Reihenschiebern (9, 10) über einen bezüglich der Einlaufrichtung (ER) schräg verlaufenden Bandübergang (16) vom Einlaufförderband (5a) auf das Abbremsband (14) laufen.

7. Verfahren nach wenigstens einem der vorigen Ansprüche, wobei eine vorauslaufende Behälterreihe (2a) im zugeordneten Reihenschieber (9) in Pufferrichtung (PR) über ein insbesondere mit der Auslaufgeschwindigkeit (VA) des Auslaufförderbands (6a) laufendes Beschleunigungsband (21) auf das Auslaufförderband geschoben wird, und wobei eine unmittelbar nachfolgende Behälterreihe (2a) im zugeordneten Reihenschieber (10) auf das demgegenüber abgebremste und insbesondere stillstehend Beschleunigungsband geschoben, sukzessive auf die Auslaufgeschwindigkeit beschleunigt und auf das Auslaufförderband geleitet wird, so dass die Behälterreihen dort in Auslaufrichtung (AR) lückenlos aneinander anschließen.

8. Verfahren nach Anspruch 7, wobei die nachfolgende Behälterreihe im zugeordneten Reihenschieber über einen schräg zur Auslaufrichtung verlaufenden Bandübergang vom Beschleunigungsband auf das Auslaufförderband läuft.

9. Verfahren nach wenigstens einem der vorigen Ansprüche, wobei die Behälter (2) von wenigstens einem in die Pufferfläche (3) integrierten und quer zur Pufferrichtung (PR) verlaufenden Gruppierungsband (25, 26) innerhalb der Reihenschieber (9, 10) aneinandergeschoben werden, und/ oder aus vorauslaufenden Reihenschiebern neben die Pufferfläche und von dort wieder zurück in jeweils nachfolgende Reihenschieber gefahren werden.

10. Verfahren nach wenigstens einem der vorigen Ansprüche, wobei man unterhalb des Einlaufförderbands (5a) und/oder des Auslaufförderbands (6a) und/oder der Pufferfläche (3) geführte Mitnehmer (35) durch quer zur Pufferrichtung (PR) an den Reihenschiebern (9, 10) verlaufende Durchgriffsschlitze (37) in die Reihenschieber und zwischen darin quer zur Pufferrichtung benachbarte Behälter (2a) motorisch einschwenkt und die Mitnehmer dann motorisch entlang der Durchgriffsschlitze bewegt, wodurch eine Transportteilung (38) der Behälter quer zur Pufferrichtung hergestellt wird und/oder die Behälter gruppiert werden und/oder die Behälter zur Übergabe an das Auslaufförderband beschleunigt werden.

11. Verfahren nach wenigstens einem der vorigen Ansprüche, wobei man zum Ausspeichern Schlitten (43) mit Fixierelementen (43a) zum gesteuerten Festhalten / Freigeben einer Gruppe (2d) aus den Reihenschiebern (9, 10) auslaufender Behälter (2) zwischen dem Auslaufförderband (6a) und einer in Auslaufrichtung (6a) an das Auslaufförderband anschließenden Förderstrecke (44) in/entgegen Auslaurichtung (AR) oszillierend bewegt.

12. Verfahren nach wenigstens einem der vorigen Ansprüche, wobei die Planarmotorläufer (54) in einer Anfahrrichtung (55) quer zur Pufferrichtung (PR) in den Bereich der Reihenschieber (9, 10) fahren, die Reihenschieber die Behälter (2) von der Pufferfläche (3) auf Ladeflächen (54a) der dort wartenden Planarmotorläufer verschieben und diese die Behälter insbesondere in Anfahrrichtung von der Pufferfläche wegbewegen.

13. Verfahren nach wenigstens einem der vorigen Ansprüche, wobei die Reihenschieber (9, 10) die Behälter (2) einreihig voneinander getrennt in quer zur Pufferrichtung (PR) verlaufenden und sowohl in als auch entgegen der Pufferrichtung begrenzten Führungskanälen (9c, 10c) aufnehmen.

14. Vorrichtung (1) zum Puffern einreihig gruppierter Behälter (2) in einer Behälterbehandlungsanlage, insbesondere Abfüllanlage, umfassend eine Pufferfläche (3) und ein darüber angeordnetes Transportsystem (4) zum Verschieben der Behälter auf der Pufferfläche in einer Pufferrichtung (PR) von einem Einlaufbereich (5) mit wenigstens einem quer zur Pufferrichtung (PR) verlaufenden Einlaufförderband (5a) in einen Auslaufbereich (6) mit wenigstens einem in Pufferrichtung an die Pufferfläche anschließenden und quer dazu angetriebenen Auslaufförderband (6a) oder mit wenigstens einem in Pufferrichtung anschließend an die Pufferfläche heranfahrbaren und insbesondere lenkbaren Planarmotorläufer (54), wobei das Transportsystem an Schienen (8) geführte und unabhängig voneinander angetriebene Shuttles (7) mit insbesondere paarweise quer zur Pufferrichtung ausgerichteten Reihenschiebern (9, 10) zum einreihig gruppierten Verschieben der Behälter umfasst, **gekennzeichnet durch** wenigstens einen im/am Einlaufbereich und/oder Auslaufbereich angeordneten und intermittierend angetriebenen Behältermanipulator (11, 12, 31, 32, 42) zum Beschleunigen und/oder Abbremsen der Behälter quer zur Pufferrichtung und relativ zum Einlaufförderband / Auslaufförderband.

15. Vorrichtung nach Anspruch 14, wobei das Einlaufförderband (5a) mehrere nebeneinander angeordnete Behälterbahnen (15a-15c) umfasst und der Behältermanipulator (11) ein einbahniges Abbremsband (14) ist, welches unter den Reihenschiebern (9, 10) an einem schräg zur Einlaufrichtung (ER) verlaufenden Bandübergang (16) an eine in Pufferrichtung gesehen vordere Behälterbahn (15a) des Einlaufförderbands quer zur Pufferrichtung (PR) anschließt, wobei das Einlaufförderband kontinuierlich mit einer vorgegebenen Einlaufgeschwindigkeit (VE) angetrieben werden kann, und wobei das Abbremsband in Abhängigkeit von den Vorschubpositionen (19a-19d) einzelner Reihenschieber (9, 10) von der Einlaufgeschwindigkeit abgebremst und wieder auf diese beschleunigt werden kann, insbesondere bis zum / ausgehend vom Stillstand des Abbremsbands.

16. Vorrichtung nach Anspruch 15, ferner mit einer Ablenkschiene (21), die schräg zur Einlaufrichtung (ER) ausgefahren und mit einem Behälter (2) in Einlaufgeschwindigkeit (VE) synchron mitbewegt, nach Ausfahren bis zu einem vorgegebenen Versatz (17) entgegen der Pufferrichtung (PR) angehalten und den Versatz synchron mit dem Vorschub eines zugeordneten Reihenschiebers (9, 10) reduzierend wieder eingefahren werden kann.

17. Vorrichtung nach einem der Ansprüche 14 bis 16, wobei das Auslaufförderband (6a) mehrere nebeneinander angeordnete Behälterbahnen (22a-22c) umfasst und der Behältermanipulator (12) ein insbesondere einbahniges Beschleunigungsband (21) ist, welches unter den Reihenschiebern (9, 10) an einem schräg zur Auslaufrichtung (AR) verlaufenden Bandübergang (23) an eine in Pufferrichtung (PR) gesehen hintere Behälterbahn (22c) des Auslaufförderbands quer zur Pufferrichtung anschließt, wobei das Auslauförderband kontinuierlich mit einer vorgegebenen Auslaufgeschwindigkeit (VA) angetrieben werden kann, und wobei das Beschleunigungsband (21) in Abhängigkeit von den Vorschubpositionen einzelner Reihenschieber, insbesondere ausgehend vom Stillstand, auf die Auslaufgeschwindigkeit des Auslaufförderbands beschleunigt werden kann.

18. Vorrichtung nach einem der Ansprüche 14 bis 17, ferner mit einem in die Pufferfläche (3) integrierten Behältermanipulator (13) umfassend: wenigstens ein schräg zur Pufferrichtung (PR) verlaufendes und intermittierend in Richtung auf das Ende der Reihenschieber hin angetriebenes Gruppierungsband (25) zum einreihigen Aneinanderschieben von Behältern (2) innerhalb einzelner Reihenschieber (9, 10).

19. Vorrichtung nach einem der Ansprüche 14 bis 18, ferner mit einem in die Pufferfläche (3) integrierten Behältermanipulator (13) umfassend: wenigstens ein quer und insbesondere orthogonal zur Pufferrichtung (PR) verlaufendes Gruppierungsband (26), das zum Austausch von Behältern (2) zwischen einzelnen Reihenschiebern (9, 10) intermittierend bidirektional angetrieben ist und sich über das Ende der Reihenschieber hinaus erstreckt.

20. Vorrichtung nach einem der Ansprüche 14 bis 20, wobei der Behältermanipulator (31, 32) umfasst: ein unterhalb des Einlaufförderbands (5a) und/oder Auslaufförderbands (6a) quer zur Pufferrichtung (PR) verlaufendes Fördermittel (34); und daran befestigte und über das Einlaufförderband / Auslaufförderband ragende Mitnehmer (35), die sich motorisch durch in den Reihenschiebern (9, 10) ausgebildete Durchgriffsschlitze (37) in die Reihenschieber zwischen die Behälter einschwenken lassen, um diese durch Antrieb des Fördermittels quer zur Pufferrichtung zu verschieben.

21. Vorrichtung nach Anspruch 20, wobei das Fördermittel (34) zum intermittierenden Beschleunigen und/oder Abbremsen der Mitnehmer (35) zwischen Stillstand und Einlaufgeschwindigkeit (VE) und/oder Auslaufgeschwindigkeit (VA) ausgebildet ist.

22. Vorrichtung nach einem der Ansprüche 14 bis 21, ferner mit einem in die Pufferfläche (3) zwischen Einlaufbereich (5) und Auslaufbereich (6)integrierten Behältermanipulator (33) umfassend: ein unterhalb der Pufferfläche (3) quer zur Pufferrichtung (PR) verlaufendes Fördermittel (34); und daran befestigte und über die Pufferfläche ragende Mitnehmer (35), die sich motorisch durch in den Reihenschiebern (9, 10) ausgebildete Durchgriffsschlitze (37) in die Reihenschieber zwischen die Behälter (2) einschwenken lassen, um diese durch Antrieb des Fördermittels quer zur Pufferrichtung zu verschieben.

23. Vorrichtung nach einem der Ansprüche 14 bis 22, wobei der Behältermanipulator (42) umfasst: einen in und entgegen der Auslaufrichtung (AR) über dem Auslaufförderband (6a) oszillierend bewegbaren Schlitten (43) mit Fixierelementen (43a) zum gesteuerten Festhalten einer Gruppe (2d) von aus den Reihenschiebern (9, 10) auslaufenden Behältern (2) und zur gesteuerten Freigabe der Behälter im Bereich einer in Auslaufrichtung an das Auslaufförderband anschließenden Förderstrecke (44) insbesondere mit einer Schubkette (44b).
